(19) Europäisches Patentamt
European Patent Office
Office européen des brevets

(11) **EP 4 349 616 B1**

(12) **EUROPEAN PATENT SPECIFICATION**

(45) Date of publication and mention of the grant of the patent:
**06.05.2026 Bulletin 2026/19**

(21) Application number: **22811039.1**

(22) Date of filing: **31.03.2022**

(51) International Patent Classification (IPC):
***B60C 1/00*** *(2006.01)* ***C08C 19/25*** *(2006.01)*
***C08L 7/00*** *(2006.01)* ***C08L 9/00*** *(2006.01)*
***C08L 9/06*** *(2006.01)* ***C08L 15/00*** *(2006.01)*
***C08L 101/00*** *(2006.01)* ***C08K 3/013*** *(2018.01)*
***C08K 3/04*** *(2006.01)*

(52) Cooperative Patent Classification (CPC):
**C08K 3/04; B60C 1/0016; C08K 3/36;** Y02T 10/86

(86) International application number:
**PCT/JP2022/016937**

(87) International publication number:
**WO 2022/249765 (01.12.2022 Gazette 2022/48)**

(54) **RUBBER COMPOSITION FOR TIRE, TREAD RUBBER, AND TIRE**

KAUTSCHUKZUSAMMENSETZUNG FÜR REIFEN, LAUFFLÄCHENKAUTSCHUK UND REIFEN

COMPOSITION DE CAOUTCHOUC POUR PNEUMATIQUE, GOMME DE BANDE DE ROULEMENT, ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2021 JP 2021090701**

(43) Date of publication of application:
**10.04.2024 Bulletin 2024/15**

(73) Proprietor: **BRIDGESTONE CORPORATION**
**Chuo-ku**
**Tokyo 104-8340 (JP)**

(72) Inventor: **KAWASHIMA, Masahiro**
**Tokyo 104-8340 (JP)**

(74) Representative: **Marks & Clerk LLP**
**15 Fetter Lane**
**London EC4A 1BW (GB)**

(56) References cited:
**WO-A1-2019/117168**
**JP-A- 2001 288 329**
**JP-A- 2017 203 111**
**JP-A- 2018 100 321**
**JP-A- 2019 038 298**
**JP-A- 2019 151 743**
**JP-A- 2019 206 652**
**JP-A- 2022 015 909**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 349 616 B1

## Description

TECHNICAL FIELD

This disclosure relates to a rubber composition for tire, a tread rubber, and a tire.

BACKGROUND

Various studies have conventionally been made to improve braking performance on a wet road surface (hereinafter, abbreviated as "wet grip performance") from the viewpoint of improving vehicle safety. For example, WO/2015/079703 (PTL 1) describes that a rubber composition, which is obtained by blending a thermoplastic resin and a filler containing silica with a rubber component containing 70 % by mass or more of natural rubber, is applied to a tread rubber of a tire to improve the braking performance of the tire on both a dry road surface and a wet road surface.

On the other hand, in response to global moves to regulate carbon dioxide emissions with the increased interest in environmental problems in recent years, demand to improve the fuel efficiency of automobiles is growing. To meet such demand, improvement in fuel efficiency (reduction in rolling resistance) is required in terms of tire performance.

CITATION LIST

Patent Literature

PTL 1: WO/2015/079703

SUMMARY

(Technical Problem)

However, we have studied the technique described in PTL 1 and found that, although the wet grip performance of a tire can be improved, there is room for improvement in fuel efficiency.

It could thus be helpful to provide a rubber composition for tire which can solve the problem of the prior art and can highly balance wet grip performance with fuel efficiency in a tire, as well as a tread rubber containing the rubber composition.

It also could be helpful to provide a tire in which wet grip performance is highly balanced with fuel efficiency.

(Solution to Problem)

We thus provide the following.

A rubber composition for tire of the present disclosure is a rubber composition for tire containing a rubber component, a resin component, and a filler, where

the rubber component contains a diene-based rubber component A with a glass transition temperature of -50 °C or lower that contains an isoprene skeleton rubber, and a diene-based rubber component B incompatible with the diene-based rubber component A that contains a butadiene skeleton rubber,
the total styrene content in the diene-based rubber component B is 15 % by mass or less,
the resin component has a weight-average molecular weight (Mw) of 200 g/mol to 1600 g/mol, and the content of the resin component is 1 part by mass to 45 parts by mass with respect to 100 parts by mass of the rubber component,
the content of the filler is 20 parts by mass to 120 parts by mass with respect to 100 parts by mass of the rubber component, and
a ratio of tanδ at 0 °C (0 °C tanδ) to tanδ at 50 °C (50 °C tanδ) (0 °C tanδ/50 °C tanδ) is 2.7 or more.

By applying the rubber composition for tire of the present disclosure to a tire, it is possible to highly balance wet grip performance with fuel efficiency in the tire.

The weight-average molecular weight of the resin component is measured by gel permeation chromatography (GPC) and calculated as a polystyrene-equivalent value.

Further, a tread rubber of the present disclosure contains the rubber composition for tire described above. By applying the tread rubber of the present disclosure to a tire, it is possible to highly balance wet grip performance with fuel efficiency in the tire.

Further, a tire of the present disclosure includes the tread rubber described above. In the tire of the present

disclosure, wet grip performance is highly balanced with fuel efficiency.

(Advantageous Effect)

According to the present disclosure, it is possible to provide a rubber composition for tire capable of highly balancing wet grip performance with fuel efficiency in a tire, and a tread rubber containing the rubber composition.
Further, according to the present disclosure, it is possible to provide a tire in which wet grip performance is highly balanced with fuel efficiency.

DETAILED DESCRIPTION

The following describes the rubber composition for tire, the tread rubber, and the tire of the present disclosure in detail based on their embodiments.

<Rubber composition for tire>

The rubber composition for tire of the present disclosure is a rubber composition for tire containing a rubber component, a resin component, and a filler, where
the rubber component contains a diene-based rubber component A with a glass transition temperature of -50 °C or lower that contains an isoprene skeleton rubber, and a diene-based rubber component B incompatible with the diene-based rubber component A that contains a butadiene skeleton rubber.
In the present disclosure, the total styrene content in the diene-based rubber component B is 15 % by mass or less,

the resin component contains 1 part by mass to 45 parts by mass of a resin with respect to 100 parts by mass of the rubber component, where the resin has a weight-average molecular weight (Mw) of 200 g/mol to 1600 g/mol,
the content of the filler is 20 parts by mass to 120 parts by mass with respect to 100 parts by mass of the rubber component, and
a ratio of tanδ at 0 °C (0 °C tanδ) to tanδ at 50 °C (50 °C tanδ) (0 °C tanδ/50 °C tanδ) is 2.7 or more.

In the rubber composition for tire of the present disclosure, a resin having a weight-average molecular weight (Mw) of 200 g/mol to 1600 g/mol is blended at an amount of 1 part by mass or more with respect to 100 parts by mass of the rubber component, which can improve the wet grip performance of a tire using the rubber composition.
However, when the resin component is simply blended, the fuel efficiency of the tire using the rubber composition deteriorates. Further, when the content of the resin component is more than 45 parts by mass with respect to 100 parts by mass of the rubber component, the fuel efficiency of the tire using the rubber composition deteriorates. On the other hand, when the content of the resin component is 45 parts by mass or less with respect to 100 parts by mass of the rubber component and the total styrene content in the diene-based rubber component B is 15% by mass or less in the rubber composition for tire of the present disclosure, the dispersibility of the filler is improved to complement the fuel efficiency of the tire using the rubber composition.
Further, the rubber composition of the present disclosure has a ratio of tanδ at 0 °C (0 °C tanδ) to tanδ at 50 °C (50 °C tanδ) (0 °C tanδ/50 °C tanδ) of 2.7 or more, which can suppress the loss at high temperatures while increasing the loss at low temperatures. As a result, it is possible to achieve both wet grip performance and fuel efficiency at a high level in a tire using the rubber composition.
In the rubber composition for tire of the present disclosure, the 0 °C tanδ/50 °C tanδ is required to be 2.7 or more. When the 0 °C tanδ/50 °C tanδ is less than 2.7, the effect of suppressing the loss at high temperatures while increasing the loss at low temperatures is insufficient. As a result, it is impossible to achieve both wet grip performance and fuel efficiency at a high level when applying the rubber composition to a tire.
From the same viewpoint, the 0 °C tanδ/50 °C tanδ is preferably 2.7 or more and more preferably 2.8 or more. When the 0 °C tanδ/50 °C tanδ is too large, the effect of reducing rolling resistance is insufficient. Therefore, the 0 °C tanδ/50 °C tanδ is preferably 5.0 or less and more preferably 4.5 or less.
In the present disclosure, the 0 °C tanδ and the 50 °C tanδ refer to the 0 °C tanδ and the 50 °C tanδ after vulcanizing the rubber composition for tire of the present disclosure.
Regarding the measurement of the 0 °C tanδ and the 500 °C tanδ, there are no particular limitations as long as the respective tanδ values can be obtained accurately, and they can be obtained using commonly used measuring instruments. In the present disclosure, the 0 °C tanδ and the 50 °C tanδ are measured using a spectrometer manufactured by Ueshima Seisakusho Co., Ltd.
When measuring the 0 °C tanδ and the 50 °C tanδ, the conditions of initial strain, dynamic strain and frequency

may be an initial strain of 2 %, a dynamic strain of 1 %, and a frequency of 52Hz, for example.

The 50 °C tanδ of the rubber composition for tire of the present disclosure is not particularly limited as long as the above-described relationship of 0 °C tanδ/50 °C tanδ can be satisfied. However, from the viewpoint of achieving both wet grip performance and fuel efficiency at a higher level when applied to a tire, it is preferably 0.090 to 0.180 and more preferably 0.0950 to 0.170.

The 0 °C tanδ of the rubber composition for tire of the present disclosure is not particularly limited as long as the above-described relationship of 0 °C tanδ/50 °C tanδ can be satisfied. However, from the viewpoint of achieving both wet grip performance and fuel efficiency at a higher level when applied to a tire, it is preferably 0.350 to 0.850 and more preferably 0.370 to 0.830.

A method for adjusting the value of 0 °C tanδ/50 °C tanδ is not particularly limited, and it may be a method of optimizing the components of the rubber composition for tire of the present disclosure, for example. For example, as will be described later, the value of 0 °C tanδ/50 °C tanδ can be set within the range of the present disclosure by limiting the type and content of the rubber component, or by adjusting the type and content of the filler or the type and content of the resin component.

(Rubber component)

The rubber composition for tire of the present disclosure contains a diene-based rubber component A with a glass transition temperature of -50 °C or lower that contains an isoprene skeleton rubber, and a diene-based rubber component B incompatible with the diene-based rubber component A that contains a butadiene skeleton rubber, and it may further contain another rubber component.

-Diene-based rubber component A-

The diene-based rubber component A contains an isoprene skeleton rubber. The isoprene skeleton rubber is a rubber having an isoprene unit as a main skeleton, and specific examples thereof include at least one of natural rubber (NR) and synthetic isoprene rubber (IR).

When the rubber component contains an isoprene skeleton rubber as the diene-based rubber component A, the fracture strength of the rubber composition can be improved. As a result, it is possible to reduce the rolling resistance of a tire using the rubber composition, to improve the fuel efficiency, and to improve the wear resistance of the tire.

The content of the isoprene skeleton rubber in the rubber component is preferably 1 % by mass or more and less than 50 % by mass, and it is more preferably 1 % by mass to 40 % by mass. When the content of the isoprene skeleton rubber is 1 % by mass or more and less than 50 % by mass in the rubber component, the fuel efficiency and the wet grip performance of a tire using the rubber composition can be further improved. Further, when the content of the isoprene skeleton rubber is 1 % by mass to 40 % by mass in the rubber component, the fuel efficiency and the wet grip performance of a tire using the rubber composition can be further improved. From the viewpoint of further increasing the effect of blending the isoprene skeleton rubber, the content of the isoprene skeleton rubber is more preferably 10 parts by mass or more in 100 parts by mass of the rubber component.

The content ratio of the diene-based rubber component A in the rubber component is preferably 1 % by mass or more and less than 50 % by mass and more preferably 1 % by mass to 40 % by mass. When the content ratio of the diene-based rubber component A is 1 % by mass or more and less than 50 % by mass, the fuel efficiency and the wet grip performance of a tire using the rubber composition can be further improved. When the content ratio of the isoprene skeleton rubber is 1 % by mass to 40 % by mass, the fuel efficiency and the wet grip performance of a tire using the rubber composition can be further improved.

The diene-based rubber component A may be composed only of the isoprene skeleton rubber. Alternatively, it may appropriately contain a rubber other than the isoprene skeleton rubber. In this case, the rubber other than the isoprene skeleton rubber is a rubber different from the diene-based rubber component B incompatible with the diene-based rubber component A. The content ratio of the isoprene skeleton rubber in the diene-based rubber component A is preferably 50 % by mass or more, more preferably 70 % by mass or more, and most preferably 100 %.

-Diene-based rubber component B-

The diene-based rubber component B is a rubber component incompatible with the diene-based rubber component A, and the total styrene content is 15 % by mass or less. By containing the diene-based rubber component B, it is possible to sufficiently improve the fuel efficiency and the wear resistance of a tire using the rubber composition.

The total styrene content of the diene-based rubber component B means the proportion of styrene units contained in the diene-based rubber component B. When the amount of bound styrene in the styrene-butadiene rubber or the like contained as the diene-based rubber component B is 15 % by mass or less, the glass transition temperature

tends to be low. The amount of bound styrene in the styrene-butadiene rubber is more preferably 14 % by mass or less, still more preferably 13 % by mass or less, and even more preferably 12 % by mass or less. Further, the amount of bound styrene in the styrene-butadiene rubber is preferably 5 % by mass or more, more preferably 7 % by mass or more, and still more preferably 8 % by mass or more, from the viewpoint of the wear resistance of a tire using the rubber composition.

The amount of bound styrene in the styrene-butadiene rubber can be adjusted by adjusting the amount of monomer used in polymerization of the styrene-butadiene rubber, the degree of polymerization, and the like. Further, when the total styrene content of the diene-based rubber component B is a content including multiple types of rubber, the total of the styrene units of all the rubbers contained in the diene-based rubber component B is the total styrene content.

The amount of bound styrene in the diene-based rubber component B can be adjusted by adjusting the amount of monomer used in polymerization of the rubber of the diene-based rubber component B, the degree of polymerization, and the like.

The type of the rubber of the diene-based rubber component B is not particularly limited as long as it is a rubber component incompatible with the diene-based rubber component A as described above.

For example, at least one of styrene-butadiene rubber (SBR) and butadiene rubber (BR) can be used as the diene-based rubber component B. From the viewpoint of achieving better wet grip performance, it is preferable to contain at least styrene-butadiene rubber.

The butadiene rubber is preferably high-cis polybutadiene, where the high-cis polybutadiene preferably has a cis-1,4 bond content of 90 % by mass or more. When the diene-based rubber component B contains butadiene rubber, the content of the butadiene rubber is preferably in a range of 1 % by mass to 35 % by mass in 100 % by mass of the rubber component.

When styrene-butadiene rubber is contained as the diene-based rubber component B, the content of the styrene-butadiene rubber is preferably 30 % by mass to 100 % by mass, more preferably 40 % by mass to 100 % by mass, and still more preferably 50 % by mass to 100 % by mass, in 100 % by mass of the rubber component. This is because, when the content of the styrene-butadiene rubber is 50 % by mass to 100 % by mass, the fuel efficiency and the wet grip performance of a tire using the rubber composition for tire can be further improved.

The glass transition temperature of the styrene-butadiene rubber is not particularly limited and can be appropriately selected according to the required performance. For example, the glass transition temperature of the styrene-butadiene rubber can be -10 °C or lower, -30 °C or lower, or lower than -40 °C. Among these cases, when the glass transition temperature of the styrene-butadiene rubber is lower than -40 °C, the fuel efficiency and the wear resistance of a tire using the rubber composition can be sufficiently improved.

The styrene-butadiene rubber is preferably modified with a modifying agent having a functional group containing a nitrogen atom and an alkoxy group. When the styrene-butadiene rubber is modified with a modifying agent having a functional group containing a nitrogen atom and an alkoxy group, the balance between wet grip performance, and fuel efficiency and wear resistance is further improved in a tire using the rubber composition, and particularly, the fuel efficiency and the wear resistance can be further improved.

The modifying agent having a functional group containing a nitrogen atom and an alkoxy group is a general term for modifying agents having at least one functional group containing a nitrogen atom and at least one alkoxy group.

The functional group containing a nitrogen atom is preferably selected from the following:
a monovalent hydrocarbon group having 1 to 30 carbon atoms and containing a linear, branched, alicyclic or aromatic ring, which has a functional group selected from the group consisting of a primary amino group, a primary amino group protected with a hydrolyzable protecting group, an onium salt residue of primary amine, an isocyanate group, a thioisocyanate group, an imine group, an imine residue, an amide group, a secondary amino group protected with a hydrolyzable protecting group, a cyclic secondary amino group, an onium salt residue of cyclic secondary amine, an acyclic secondary amino group, an onium salt residue of acyclic secondary amine, an isocyanuric acid triester residue, a cyclic tertiary amino group, an acyclic tertiary amino group, a nitrile group, a pyridine residue, an onium salt residue of cyclic tertiary amine and an onium salt residue of acyclic tertiary amine, or a monovalent hydrocarbon group having 1 to 30 carbon atoms and containing a linear, branched, alicyclic or aromatic ring, which may contain at least one type of heteroatom selected from an oxygen atom, a sulfur atom and a phosphorus atom.

--Modified styrene-butadiene rubber of first preferred embodiment--

The styrene-butadiene rubber (SBR) is preferably modified with an aminoalkoxysilane compound. From the viewpoint of having high affinity for fillers, it is more preferable that the styrene-butadiene rubber (SBR) have its terminal modified with an aminoalkoxysilane compound. When the terminal of the styrene-butadiene rubber is modified with an aminoalkoxysilane compound, the interaction between the modified styrene-butadiene rubber and the filler (especially silica) increases significantly.

The modified portion of the styrene-butadiene rubber may be a molecular terminal as described above or may be a main chain.

The styrene-butadiene rubber having a modified molecular terminal can be produced, for example, by reacting various modifying agents with the terminal of a styrene-butadiene copolymer having an active terminal according to the method described in WO/2003/046020 or JP 2007-217562 A.

In one preferred embodiment, the styrene-butadiene rubber having a modified molecular terminal can be produced by reacting a terminal of a styrene-butadiene copolymer having an active terminal with a cis-1,4 bond content of 75% or more with an aminoalkoxysilane compound and then reacting the a terminal with a partial ester of a carboxylic acid of a polyhydric alcohol for stabilization, according to the method described in WO/2003/046020 or JP 2007-217562 A.

The partial ester of a carboxylic acid of a polyhydric alcohol means a partial ester which is an ester of a polyhydric alcohol and a carboxylic acid and has one or more hydroxyl groups. Specifically, an ester of a saccharide or modified saccharide having 4 or more carbon atoms and a fatty acid is preferably used. The ester is more preferably, for example, (1) a partial ester of a fatty acid of a polyhydric alcohol, especially a partial ester of a saturated higher fatty acid or unsaturated higher fatty acid having 10 to 20 carbon atoms and a polyhydric alcohol (it may be any of monoester, diester, and triester), or (2) an ester compound in which 1 to 3 partial esters of a polyhydric carboxylic acid and a higher alcohol are bonded to a polyhydric alcohol.

The polyhydric alcohol used as the raw material of the partial ester is preferably a saccharide having 5 or 6 carbon atoms and at least 3 hydroxyl groups (which may be hydrogenated or not hydrogenated), a glycol, a polyhydroxy compound, or the like. The raw material fatty acid is preferably a saturated or unsaturated fatty acid having 10 to 20 carbon atoms, and examples thereof include stearic acid, lauric acid, and palmitic acid.

Among the partial esters of a fatty acid of a polyhydric alcohol, a sorbitan fatty acid ester is preferred, and specific examples thereof include sorbitan monolauric acid ester, sorbitan monopalmitic acid ester, sorbitan monostearic acid ester, sorbitan tristearic acid ester, sorbitan monooleic acid ester, and sorbitan trioleic acid ester.

The aminoalkoxysilane compound is not particularly limited, but it is preferably an aminoalkoxysilane compound represented by the following general formula (i).

$$R^{11}_{a}\text{-Si-}(OR^{12})_{4-a} \qquad \text{(i)}$$

In the general formula (i), $R^{11}$ and $R^{12}$ each independently represent a monovalent aliphatic hydrocarbon group having 1 to 20 carbon atoms or a monovalent aromatic hydrocarbon group having 6 to 18 carbon atoms; at least one of $R^{11}$ and $R^{12}$ is substituted with an amino group; "a" represents an integer of 0 to 2; when there are multiple $OR^{12}$s, $OR^{12}$s may be the same as or different from each other; and the molecule contains no active proton therein.

The aminoalkoxysilane compound is preferably an aminoalkoxysilane compound represented by the following general formula (ii).

[Chem. 1]

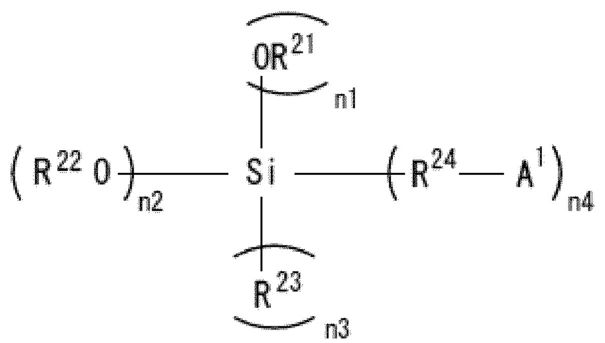

· · · · (ii)

In the general formula (ii), n1+n2+n3+n4=4 (where n2 is an integer of 1 to 4, and n1, n3 and n4 are integers of 0 to 3).

$A^1$ is at least one functional group selected from the group consisting of a saturated cyclic tertiary amine compound residue, an unsaturated cyclic tertiary amine compound residue, a ketimine residue, a nitrile group, a (thio)isocyanate group, an isocyanuric acid trihydrocarbyl ester group, a nitrile group, a pyridine group, a (thio)ketone group, an amide group, and a primary or secondary amino group having a hydrolyzable group. When n4 is 2 or more, A1s may be the same as or different from each other, and $A^1$ may be a divalent group that combines with Si to form a cyclic structure.

$R^{21}$ is a monovalent aliphatic or alicyclic hydrocarbon group having 1 to 20 carbon atoms or a monovalent aromatic hydrocarbon group having 6 to 18 carbon atoms. When n1 is 2 or more, $R^{21}$s may be the same as or different from each other.

$R^{22}$ is a monovalent aliphatic or alicyclic hydrocarbon group having 1 to 20 carbon atoms or a monovalent aromatic hydrocarbon group having 6 to 18 carbon atoms, and any of them may contain a nitrogen atom and/or a silicon atom. When n2 is 2 or more, $R^{22}$s may be the same as or different from each other or may be taken together to form a ring.
$R^{23}$ is a monovalent aliphatic or alicyclic hydrocarbon group having 1 to 20 carbon atoms, a monovalent aromatic hydrocarbon group having 6 to 18 carbon atoms, or a halogen atom. When n3 is 2 or more, $R^{23}$s may be the same as or different from each other.
$R^{24}$ is a divalent aliphatic or alicyclic hydrocarbon group having 1 to 20 carbon atoms or a divalent aromatic hydrocarbon group having 6 to 18 carbon atoms. When n4 is 2 or more, $R^{24}$s may be the same as or different from each other.
The hydrolyzable group in the primary or secondary amino group having a hydrolyzable group is preferably a trimethylsilyl group or a tert-butyldimethylsilyl group, and it is particularly preferably a trimethylsilyl group.
The aminoalkoxysilane compound represented by the general formula (ii) is preferably an aminoalkoxysilane compound represented by the following general formula (iii).

[Chem. 2]

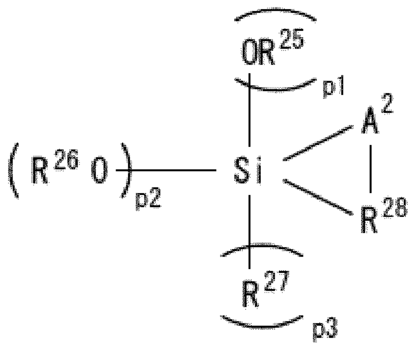

· · · · (iii)

In the general formula (iii), p1+p2+p3=2 (where p2 is an integer of 1 to 2, and p1 and p3 are integers of 0 to 1).
$A^2$ is NRa (Ra is a monovalent hydrocarbon group, a hydrolyzable group, or a nitrogen-containing organic group).
$R^{25}$ is a monovalent aliphatic or alicyclic hydrocarbon group having 1 to 20 carbon atoms or a monovalent aromatic hydrocarbon group having 6 to 18 carbon atoms.
$R^{26}$ is a monovalent aliphatic or alicyclic hydrocarbon group having 1 to 20 carbon atoms, a monovalent aromatic hydrocarbon group having 6 to 18 carbon atoms, or a nitrogen-containing organic group, and any of them may contain a nitrogen atom and/or a silicon atom. When p2 is 2, $R^{26}$s may be the same as or different from each other or may be taken together to form a ring.
$R^{27}$ is a monovalent aliphatic or alicyclic hydrocarbon group having 1 to 20 carbon atoms, a monovalent aromatic hydrocarbon group having 6 to 18 carbon atoms, or a halogen atom.
$R^{28}$ is a divalent aliphatic or alicyclic hydrocarbon group having 1 to 20 carbon atoms or a divalent aromatic hydrocarbon group having 6 to 18 carbon atoms.
The hydrolyzable group is preferably a trimethylsilyl group or a tert-butyldimethylsilyl group, and it is particularly preferably a trimethylsilyl group.
The aminoalkoxysilane compound represented by the general formula (ii) is also preferably an aminoalkoxysilane compound represented by the following general formula (iv) or the following general formula (v).

[Chem. 3]

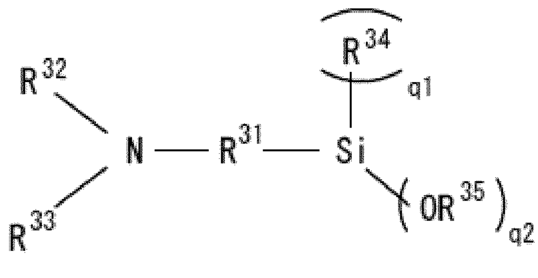

· · · · (iv)

In the general formula (iv), q1+q2=3 (where q1 is an integer of 0 to 2, and q2 is an integer of 1 to 3).
$R^{31}$ is a divalent aliphatic or alicyclic hydrocarbon group having 1 to 20 carbon atoms or a divalent aromatic

hydrocarbon group having 6 to 18 carbon atoms.

$R^{32}$ and $R^{33}$ are each independently a hydrolyzable group, a monovalent aliphatic or alicyclic hydrocarbon group having 1 to 20 carbon atoms, or a monovalent aromatic hydrocarbon group having 6 to 18 carbon atoms.

$R^{34}$ is a monovalent aliphatic or alicyclic hydrocarbon group having 1 to 20 carbon atoms, or a monovalent aromatic hydrocarbon group having 6 to 18 carbon atoms. When q1 is 2, $R^{34}$s may be the same as or different from each other.

$R^{35}$ is a monovalent aliphatic or alicyclic hydrocarbon group having 1 to 20 carbon atoms, or a monovalent aromatic hydrocarbon group having 6 to 18 carbon atoms. When q2 is 2 or more, $R^{35}$s may be the same as or different from each other.

[Chem. 4]

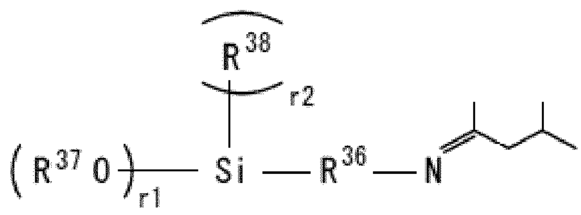

· · · · (v)

In the general formula (v), r1+r2=3 (where r1 is an integer of 1 to 3, and r2 is an integer of 0 to 2).

$R^{36}$ is a divalent aliphatic or alicyclic hydrocarbon group having 1 to 20 carbon atoms, or a divalent aromatic hydrocarbon group having 6 to 18 carbon atoms.

$R^{37}$ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having 1 to 20 carbon atoms, or a monovalent aromatic hydrocarbon group having 6 to 18 carbon atoms. When r1 is 2 or more, $R^{37}$s may be the same as or different from each other.

$R^{38}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms. When r2 is 2, $R^{38}$s may be the same as or different from each other.

Specific examples of the aminoalkoxysilane compound represented by the general formula (v) include N-(1,3-dimethylbutylidene)-3-triethoxysilyl-1-propanamine.

The aminoalkoxysilane compound represented by the general formula (ii) is also preferably an aminoalkoxysilane compound represented by the following general formula (vi) or the following general formula (vii).

[Chem. 5]

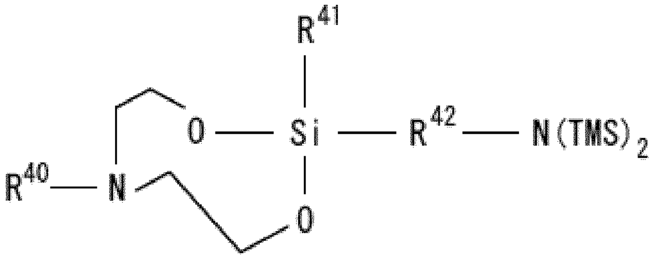

· · · · (vi)

In the general formula (vi), $R^{40}$ is a trimethylsilyl group, a monovalent aliphatic or alicyclic hydrocarbon group having 1 to 20 carbon atoms, or a monovalent aromatic hydrocarbon group having 6 to 18 carbon atoms.

$R^{41}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

$R^{42}$ is a divalent aliphatic or alicyclic hydrocarbon group having 1 to 20 carbon atoms or a divalent aromatic hydrocarbon group having 6 to 18 carbon atoms.

As used herein, TMS represents a trimethylsilyl group (the same applies hereinafter).

[Chem. 6]

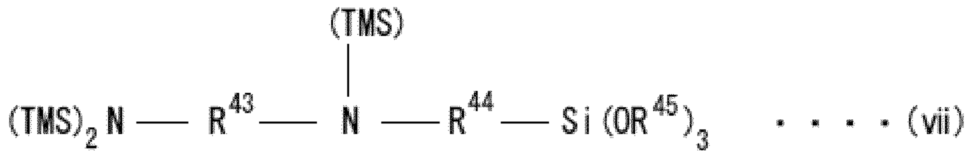

In the general formula (vii), $R^{43}$ and $R^{44}$ are each independently a divalent aliphatic or alicyclic hydrocarbon group having 1 to 20 carbon atoms, or a divalent aromatic hydrocarbon group having 6 to 18 carbon atoms.

$R^{45}$ is a monovalent aliphatic or alicyclic hydrocarbon group having 1 to 20 carbon atoms, or a monovalent aromatic hydrocarbon group having 6 to 18 carbon atoms, and $R^{45}$s may be the same as or different from each other.

The aminoalkoxysilane compound represented by the general formula (ii) is also preferably an aminoalkoxysilane compound represented by the following general formula (viii) or the following general formula (ix).

[Chem. 7]

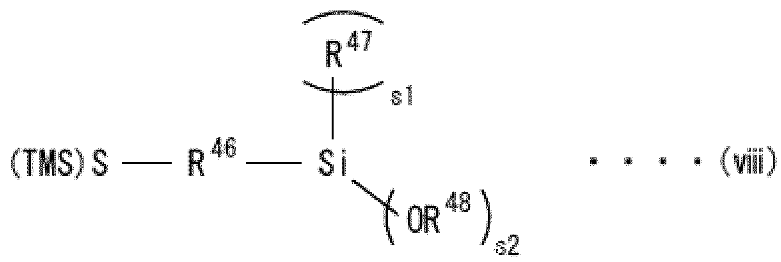

In the general formula (viii), s1+s2 is 3 (where s1 is an integer of 0 to 2, and s2 is an integer of 1 to 3).

$R^{46}$ is a divalent aliphatic or alicyclic hydrocarbon group having 1 to 20 carbon atoms, or a divalent aromatic hydrocarbon group having 6 to 18 carbon atoms.

$R^{47}$ and $R^{48}$ are each independently a monovalent aliphatic or alicyclic hydrocarbon group having 1 to 20 carbon atoms, or a monovalent aromatic hydrocarbon group having 6 to 18 carbon atoms. $R^{47}$s or $R^{48}$s may be the same as or different from each other.

[Chem. 8]

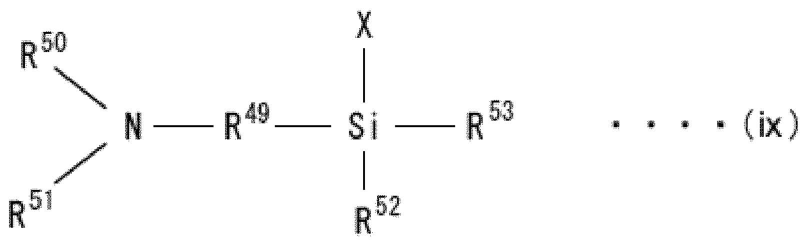

In the general formula (ix), X is a halogen atom.

$R^{49}$ is a divalent aliphatic or alicyclic hydrocarbon group having 1 to 20 carbon atoms, or a divalent aromatic hydrocarbon group having 6 to 18 carbon atoms.

$R^{50}$ and $R^{51}$ are each independently a hydrolyzable group, a monovalent aliphatic or alicyclic hydrocarbon group having 1 to 20 carbon atoms, or a monovalent aromatic hydrocarbon group having 6 to 18 carbon atoms; alternatively, $R^{50}$ and $R^{51}$ are combined to form a divalent organic group.

$R^{52}$ and $R^{53}$ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

$R^{50}$ and $R^{51}$ are preferably a hydrolyzable group, and the hydrolyzable group is preferably a trimethylsilyl group or a tert-butyldimethylsilyl group and is particularly preferably a trimethylsilyl group.

The aminoalkoxysilane compound represented by the general formula (ii) is preferably an aminoalkoxysilane compound represented by the following general formula (x), the following general formula (xi), the following general

formula (xii), or the following general formula (xiii).

[Chem. 9]

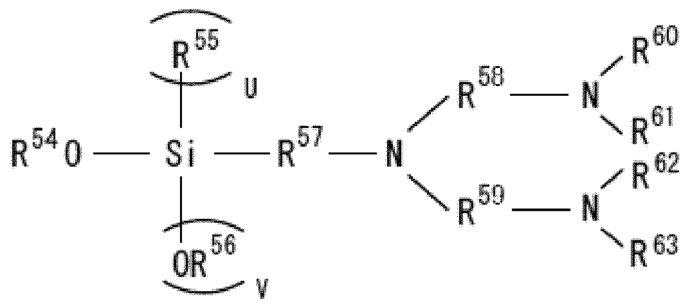

· · · · (x)

[Chem. 10]

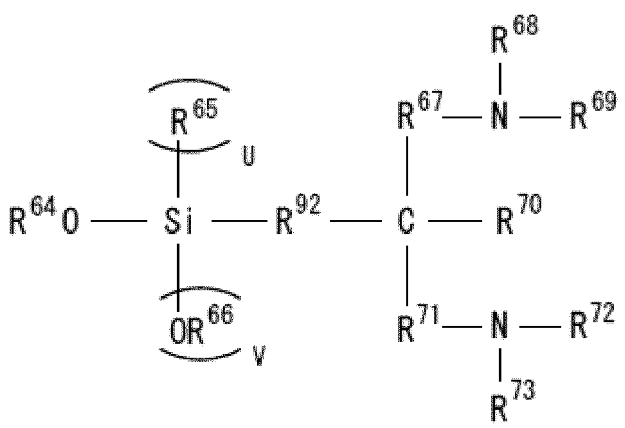

· · · · (xi)

[Chem. 11]

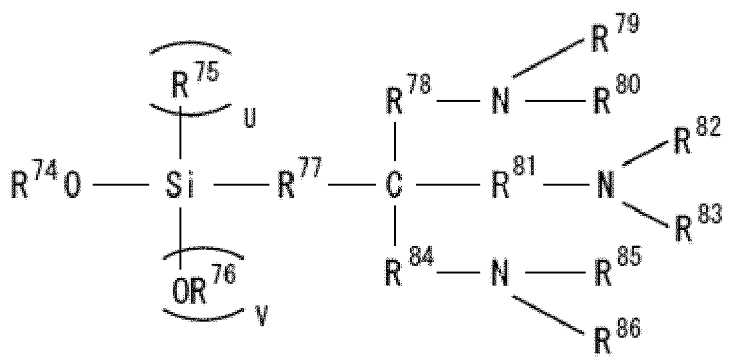

· · · · (xii)

[Chem. 12]

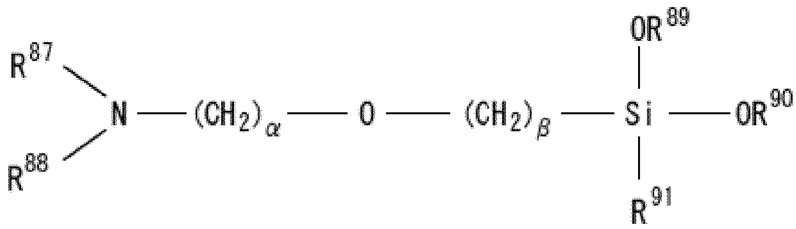

(xiii)

In the general formulas (x) to (xiii), symbols U and V are each an integer satisfying 0 to 2 and U+V=2.

$R^{54}$ to $R^{92}$ in the general formulas (x) to (xiii) may be the same as or different from each other, which may be a monovalent or divalent aliphatic or alicyclic hydrocarbon group having 1 to 20 carbon atoms, or a monovalent or divalent aromatic hydrocarbon group having 6 to 18 carbon atoms.

In the general formula (xiii), $\alpha$ and $\beta$ are integers of 0 to 5.

Among the compounds satisfying the general formula (x), general formula (xi) and general formula (xii), N1,N1,N7,N7-tetramethyl-4-((trimethoxysilyl)methyl)heptane-1,7-diamine, 2-((hexyl-dimethoxysilyl) methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, 4-(3-(dimethylamino)propyl)-N1,N1,N7,N7-tetramethyl-4-((trimethoxysilyl) methyl)heptane-1,7-diamine are particularly preferable.

Among the compounds satisfying the general formula (xiii), N,N-dimethyl-2-(3-(dimethoxymethylsilyl)propoxy) ethanamine, N,N-bis(trimethylsilyl)-2-(3-(trimethoxysilyl)propoxy)ethanamine, N,N-dimethyl-2-(3-(trimethoxysilyl)propoxy)ethanamine, N,N-dimethyl-3-(3-(trimethoxysilyl)propoxy)propane-1-amine are particularly preferable.

-Modified styrene-butadiene rubber of second preferred embodiment--

It is also preferred that the styrene-butadiene rubber (SBR) be modified with a coupling agent represented by the following general formula (I). In this case, it is possible to further improve the fuel efficiency and the wear resistance of a tire using the rubber composition.

[Chem. 13]

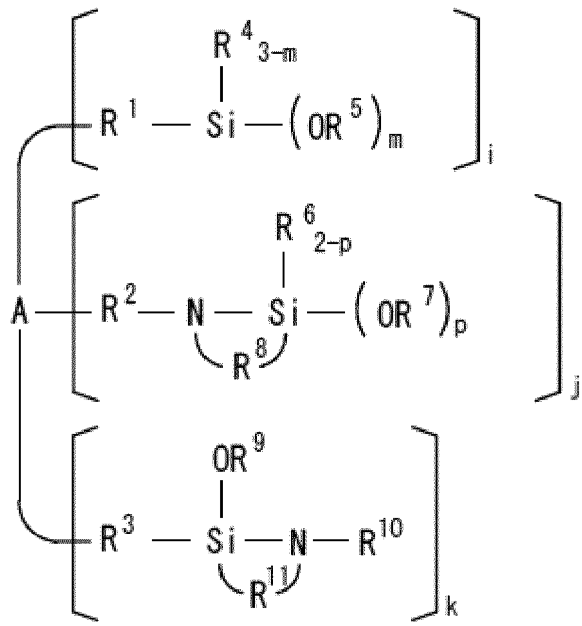 (I)

In the general formula (I), $R^1$, $R^2$ and $R^3$ each independently represent a single bond or an alkylene group having 1 to 20 carbon atoms.

$R^4$, $R^5$, $R^6$, $R^7$ and $R^9$ each independently represent an alkyl group having 1 to 20 carbon atoms.

$R^8$ and $R^{11}$ each independently represent an alkylene group having 1 to 20 carbon atoms.

$R^{10}$ represents an alkyl group or trialkylsilyl group having 1 to 20 carbon atoms.

In the general formula (I), "m" represents an integer of 1 to 3, and "p" represents 1 or 2.

When there are multiple $R^1$s to $R^{11}$s, "m"s, and "p"s, they are each independent.

In the general formula (I), "i", "j" and "k" each independently represent an integer of 0 to 6, where (i+j+k) is an integer of 3 to 10.

In the general formula (I), A represents a hydrocarbon group having 1 to 20 carbon atoms, or an organic group having 1 to 20 carbon atoms, having at least one type of atom selected from the group consisting of an oxygen atom, a nitrogen atom, a silicon atom, a sulfur atom and a phosphorus atom, and having no active hydrogen.

In the general formula (I), the hydrocarbon group represented by A includes saturated, unsaturated, aliphatic, and aromatic hydrocarbon groups. Examples of the organic group having no active hydrogen include an organic group not containing a functional group having active hydrogen such as hydroxyl group (-OH), secondary amino group (>NH), primary amino group ($-NH_2$), and sulfhydryl group (-SH).

The styrene-butadiene rubber modified with the coupling agent represented by the general formula (I) has a weight-average molecular weight (Mw) of $20\times10^4$ g/mol to $300\times10^4$ g/mol, where it is preferable to contain 0.25 % by mass to 30 % by mass of modified styrene-butadiene rubber having a molecular weight of $200\times10^4$ g/mol to $500\times10^4$ g/mol with respect to the total amount of the modified styrene-butadiene rubber, and the contracting factor (g') is preferably less than 0.64.

Typically, a branched polymer tends to have smaller molecular size than a linear polymer with the same absolute molecular weight. The contracting factor (g') is an index of the ratio of the size of the molecule to a linear polymer assumed to have the same absolute molecular weight. That is, the contracting factor (g') tends to decrease when the branching degree of the polymer increases. In this embodiment, intrinsic viscosity is used as an index of the molecular size, and the linear polymer is assumed to be in accordance with a relational expression of intrinsic viscosity $[\eta]=-3.883M^{0.771}$. The contracting factor (g') of the modified styrene-butadiene rubber at each absolute molecular weight is calculated, and an average value of contracting factors (g') when the absolute molecular weight is $100\times10^4$ to $200\times10^4$ is taken to be the contracting factor (g') of the modified styrene-butadiene rubber. As used herein, the "branch" is formed by bonding one polymer directly or indirectly to another polymer. The "branching degree" is the number of polymers that are directly or indirectly bonded to each other for one branch. For example, in the case where the below-described five styrene-butadiene copolymer chains are indirectly bonded to each other through the below-described coupling residual group, the branching degree is 5. The "coupling residual group" is a structural unit of a modified styrene-butadiene rubber that is bonded to a styrene-butadiene copolymer chain, and is, for example, a coupling agent-derived structural unit obtained by reacting the below-described styrene-butadiene copolymer with a coupling agent. Further, the styrene-butadiene copolymer chain is a structural unit of a modified styrene-butadiene rubber, and is, for example, a styrene-butadiene copolymer-derived structural unit obtained by reacting the below-described styrene-butadiene copolymer with a coupling agent.

The contracting factor (g') is preferably less than 0.64, more preferably 0.63 or less, more preferably 0.60 or less, still more preferably 0.59 or less, and even more preferably 0.57 or less. The lower limit of the contracting factor (g') is not particularly limited and may be less than or equal to a detection limit. However, the contracting factor (g') is preferably 0.30 or more, more preferably 0.33 or more, still more preferably 0.35 or more, and even more preferably 0.45 or more. By using a modified styrene-butadiene rubber whose contracting factor (g') is within this range, the processability of the rubber composition is improved.

Because the contracting factor (g') tends to depend on the branching degree, for example, the contracting factor (g') can be controlled using the branching degree as an index. Specifically, a modified styrene-butadiene rubber with a branching degree of 6 tends to have a contracting factor (g') of 0.59 or more and 0.63 or less, and a modified styrene-butadiene rubber with a branching degree of 8 tends to have a contracting factor (g') of 0.45 or more and 0.59 or less.

The styrene-butadiene rubber modified with a coupling agent represented by the general formula (I) preferably has a branch with a branching degree of 5 or more. The modified styrene-butadiene rubber more preferably has one or more coupling residual groups and styrene-butadiene copolymer chains that are bonded to the coupling residual groups, where the branch includes a branch in which 5 or more of the styrene-butadiene copolymer chains are bonded to one of the coupling residual groups. By determining the structure of the modified styrene-butadiene rubber so that the branching degree is 5 or more and the branch includes a branch in which 5 or more styrene-butadiene copolymer chains are bonded to one coupling residual group, the contracting factor (g') can be more reliably reduced to less than 0.64. The number of styrene-butadiene copolymer chains that are bonded to one coupling residual group can be determined from the value of the contracting factor (g').

The modified styrene-butadiene rubber more preferably has a branch with a branching degree of 6 or more. The modified styrene-butadiene rubber more preferably has one or more coupling residual groups and styrene-butadiene copolymer chains that are bonded to the coupling residual groups, where the branch includes a branch in which 6 or more of the styrene-butadiene copolymer chains are bonded to one of the coupling residual groups. By determining the structure of the modified styrene-butadiene rubber so that the branching degree is 6 or more and the branch includes a branch in which 6 or more styrene-butadiene copolymer chains are bonded to one coupling residual group, the contracting factor (g') can be reduced to 0.63 or less.

The modified styrene-butadiene rubber still more preferably has a branch with a branching degree of 7 or more, and even more preferably has a branch with a branching degree of 8 or more. The upper limit of the branching degree is not particularly limited, but it is preferably 18 or less. The modified styrene-butadiene rubber still more preferably has one or more coupling residual group and styrene-butadiene copolymer chains that are bonded to the coupling residual groups, where the branch includes a branch in which 7 or more of the styrene-butadiene copolymer chains are bonded to one of the coupling residual groups, and the branch particularly preferably includes a branch in which 8 or more of the styrene-butadiene copolymer chains are bonded to one of the coupling residual groups. By determining the structure of the modified styrene-butadiene rubber so that the branching degree is 8 or more and the branch includes a branch in which 8 or more styrene-butadiene copolymer chains are bonded to one coupling residual group, the contracting factor (g') can be reduced to 0.59 or less.

One or more terminals of the styrene-butadiene copolymer chains are preferably each bonded to a silicon atom of the coupling residue. In this case, multiple terminals of the styrene-butadiene copolymer chains may be bonded to one silicon atom. It is also acceptable that the terminal of the styrene-butadiene copolymer chain and a hydroxyl group or an alkoxy group having 1 to 20 carbon atoms are bonded to one silicon atom, so that the one silicon atom forms a silanol group or an alkoxysilyl group having 1 to 20 carbon atoms.

The modified styrene-butadiene rubber may be an oil-extended rubber to which extender oil is added. The modified styrene-butadiene rubber may be non-oil-extended or oil-extended. However, from the viewpoint of wear resistance, the Mooney viscosity measured at 100 °C is preferably 20 or more and 100 or less and more preferably 30 or more and 80 or less.

The weight-average molecular weight (g/mol) of the modified styrene-butadiene rubber is preferably $20\times10^4$ or more and $300\times10^4$ or less, more preferably $50\times10^4$ g/mol or more, still more preferably $64\times10^4$ g/mol or more, and even more preferably $80\times10^4$ or more. Further, the weight-average molecular weight is preferably $250\times10^4$ g/mol or less, more preferably $180\times10^4$ g/mol or less, and even more preferably $150\times10^4$ g/mol or less. When the weight-average molecular weight is $20\times10^4$ g/mol or more, the low-loss properties and the wear resistance of the rubber composition can be sufficiently improved. Further, when the weight-average molecular weight is $300\times10^4$ g/mol or less, the processability of the rubber composition is improved.

The modified styrene-butadiene rubber preferably contains 0.25 % by mass or more and 30 % by mass or less of modified styrene-butadiene rubber having a molecular weight of $200\times10^4$ g/mol or more and $500\times10^4$ g/mol or less (hereinafter, also referred to as "specific high molecular weight component") with respect to the total amount (100 % by mass) of the modified styrene-butadiene rubber. When the content of the specific high molecular weight component is 0.25 % by mass or more and 30 % by mass or less, the low-loss properties and the wear resistance of the rubber composition can be sufficiently improved. The content of the specific high molecular weight component in the modified styrene-butadiene rubber is preferably 1.0 % by mass or more, more preferably 1.4 % by mass or more, further preferably 1.75 % by mass or more, still more preferably 2.0 % by mass or more, particularly preferably 2.15 % by mass or more, and extremely preferably 2.5 % by mass or more. The content of the specific high molecular weight component in the modified styrene-butadiene rubber is preferably 28 % by mass or less, more preferably 25 % by mass or less, still more preferably 20 % by mass or less, and even more preferably 18 % by mass or less.

As use herein, the "molecular weight" of the rubber component is a standard polystyrene-equivalent molecular weight obtained by gel permeation chromatography (GPC). To obtain a modified styrene-butadiene rubber having a content of the specific high molecular weight component within the above ranges, it is preferable to control the reaction conditions in the below-described polymerization process and reaction process. For example, in the polymerization process, the amount of the below-described organic monolithium compound used as a polymerization initiator may be adjusted. Further, in the polymerization process, a method using a residence time distribution may be used, that is, the time distribution of growth reaction may be widened, in both continuous polymerization mode and batch polymerization mode.

The molecular weight distribution (Mw/Mn) of the modified styrene-butadiene rubber, which is expressed by a ratio of the weight-average molecular weight (Mw) to the number-average molecular weight (Mn), is preferably 1.6 or more and 3.0 or less. When the molecular weight distribution of the modified styrene-butadiene rubber is within this range, the rubber composition obtains good processability.

A method of producing the modified styrene-butadiene rubber is not particularly limited, but it preferably includes: a polymerization process of copolymerizing butadiene and styrene to obtain a styrene-butadiene copolymer using an organic monolithium compound as a polymerization initiator; and a reaction process of reacting an active terminal of the styrene-butadiene copolymer with a penta- or more functional reactive compound (hereinafter, also referred to as "coupling agent").

The polymerization process is preferably polymerization through growth reaction by living anion polymerization reaction. In this case, a styrene-butadiene copolymer having an active terminal can be obtained, and therefore a modified styrene-butadiene rubber with a high modification rate can be obtained.

The styrene-butadiene copolymer can be obtained by copolymerizing 1,3-butadiene and styrene.

The amount of the organic monolithium compound used as a polymerization initiator is preferably determined depending on the target molecular weight of the styrene-butadiene copolymer or modified styrene-butadiene rubber. A ratio of the amount of the monomer used such as 1,3-butadiene and styrene to the amount of the polymerization initiator used relates to the polymerization degree, that is, the number-average molecular weight and/or the weight-average molecular weight. Therefore, in order to increase the molecular weight, adjustment may be made to reduce the amount of the polymerization initiator, and in order to reduce the molecular weight, adjustment may be made to increase the amount of the polymerization initiator.

The organic monolithium compound is preferably an alkyllithium compound from the viewpoint of industrial availability and controllability of polymerization reaction. In this case, it is possible to obtain a styrene-butadiene copolymer having an alkyl group at the polymerization initiation terminal. Examples of the alkyllithium compound include n-butyllithium, sec-butyllithium, tert-butyllithium, n-hexyllithium, benzyllithium, phenyllithium, and stilbenelithium. From the viewpoint of industrial availability and controllability of polymerization reaction, the alkyllithium compound is preferably n-butyllithium or sec-butyllithium. These organic monolithium compounds may be used alone or in combination of two or more.

Examples of polymerization reaction modes that can be used in the polymerization process include a batch polymerization reaction mode and a continuous polymerization reaction mode. In the continuous mode, one reactor or two or more connected reactors may be used. Examples of a reactor for the continuous mode include a tank or tubular reactor equipped with a stirrer. Preferably, in the continuous mode, a monomer, an inert solvent, and a polymerization initiator are continuously fed to the reactor, a polymer solution containing a polymer is obtained in the reactor, and the polymer solution is continuously discharged. Examples of a reactor for the batch mode include a tank reactor equipped with a stirrer. Preferably, in the batch mode, a monomer, an inert solvent, and a polymerization initiator are fed where the monomer is continuously or intermittently added during the polymerization if necessary, a polymer solution containing a polymer is obtained in the reactor, and the polymer solution is discharged after completing the polymerization. In this embodiment, in order to obtain a styrene-butadiene copolymer having an active terminal at a high proportion, the continuous mode in which a polymer can be continuously discharged to be supplied to the next reaction in a short period of time is preferred.

In the polymerization process, the polymerization is preferably performed in an inert solvent. Examples of the solvent include hydrocarbon-based solvents such as saturated hydrocarbon and aromatic hydrocarbon. Specific examples of the hydrocarbon-based solvent include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons which are mixtures thereof. Allenes and acetylenes as impurities are preferably treated with an organic metal compound before the solvent is supplied to the polymerization reaction, because, in this way, a styrene-butadiene copolymer having an active terminal in a high concentration tends to be obtained, and a modified styrene-butadiene rubber having a high modification rate tends to

be obtained.

In the polymerization process, a polar compound may be added. By adding a polar compound, styrene can be randomly copolymerized with 1,3-butadiene. Further, there is a tendency that the polar compound can also be used as a vinylation agent for controlling the microstructure of the 1,3-butadiene moiety.

Examples of the polar compound include ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium tert-amylate, potassium tert-butyrate, sodium tert-butyrate, and sodium amylate; and phosphine compounds such as triphenylphosphine. These polar compounds may be used alone or in combination of two or more.

In the polymerization process, the polymerization temperature is preferably 0 °C or higher, more preferably 120 °C or lower, and particularly preferably 50 °C or higher and 100 °C or lower, from the viewpoint of productivity. When the polymerization temperature is within this range, it tends to be possible to ensure a sufficient amount of the coupling agent to react with the active terminal after completing the polymerization.

The amount of bound butadiene in the styrene-butadiene copolymer or modified styrene-butadiene rubber is not particularly limited, but it is preferably 40 % by mass or more and 100 % by mass or less, and more preferably 55 % by mass or more and 80 % by mass or less.

The amount of bound styrene in the styrene-butadiene copolymer or modified styrene-butadiene rubber is not particularly limited, but it is preferably more than 0 % by mass and 60 % by mass or less, and more preferably 20 % by mass or more and 45 % by mass or less.

When the amount of bound butadiene and the amount of bound styrene are within the above ranges, the low-loss properties and the wear resistance of the rubber composition can be further improved.

The amount of bound styrene can be measured by ultraviolet absorption of a phenyl group, and, based on this, the amount of bound butadiene can be obtained.

In the styrene-butadiene copolymer or modified styrene-butadiene rubber, the vinyl bond content in a butadiene bond unit is not particularly limited, but it is preferably 10 mol % or more and 75 mol % or less, and more preferably 20 mol % or more and 65 mol % or less. When the vinyl bond content is within this range, the low-loss properties and the wear resistance of the rubber composition can be further improved.

For the modified styrene-butadiene rubber, the vinyl bond content (1,2-bond content) in a butadiene bond unit can be obtained with Hampton method (R.R. Hampton, Analytical Chemistry, 21, 923 (1949)).

The alkoxy silyl group of the coupling agent represented by the general formula (I) tends to react with, for example, the active terminal of the styrene-butadiene copolymer to dissociate alkoxy lithium, thus forming a bond between a terminal of the styrene-butadiene copolymer chain and silicon of the coupling residual group. A value obtained by subtracting the number of SiORs reduced by the reaction from the total number of SiORs contained in one molecule of the coupling agent corresponds to the number of alkoxy silyl groups contained in the coupling residual group. An azasila cycle group contained in the coupling agent forms a >N-Li bond and a bond between the terminal of the styrene-butadiene copolymer and silicon of the coupling residual group. The >N-Li bond tends to easily change to >NH and LiOH with water or the like used in finishing. In the coupling agent, an unreacted residual alkoxy silyl group tends to easily change to silanol (Si-OH group) with water or the like used in finishing.

The reaction temperature in the reaction process is preferably the same temperature as the polymerization temperature of the styrene-butadiene copolymer, more preferably 0 °C or higher and 120 °C or lower, and still more preferably 50 °C or higher and 100 °C or lower. The temperature change after the polymerization process until the addition of the coupling agent is preferably 10 °C or less and more preferably 5 °C or less.

The reaction time in the reaction process is preferably 10 seconds or longer and more preferably 30 seconds or longer. The time from the end of the polymerization process to the start of the reaction process is preferably shorter, from the viewpoint of the coupling rate. The time from the end of the polymerization process to the start of the reaction process is more preferably within 5 minutes.

Mixing in the reaction process may be any of mechanical stirring, stirring with a static mixer, and the like. In the case where the polymerization process is in the continuous mode, the reaction process is preferably in the continuous mode, too. Examples of a reactor in the reaction process include a tank or tubular reactor equipped with a stirrer. The coupling agent may be diluted with an inert solvent and continuously supplied to the reactor. In the case where the polymerization process is in the batch mode, the reaction process may be performed with a method of charging the coupling agent into the polymerization reactor, or a method of transferring the polymer to another reactor.

In the general formula (I), A is preferably represented by any one of the following general formulas (II) to (V). When A is represented by any one of the general formulas (II) to (V), a modified styrene-butadiene rubber with better performance can be obtained.

**[0076]** [Chem. 14]

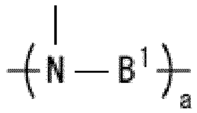

···· (II)

**[0150]** In the general formula (II), $B^1$ represents a single bond or a hydrocarbon group having 1 to 20 carbon atoms, and "a" represents an integer of 1 to 10. When there are multiple $B^1$s, each $B^1$ is independent.

**[0077]** [Chem. 15]

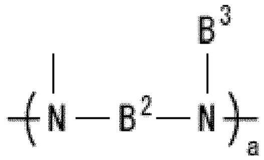

···· (III)

**[0151]** In the general formula (III), $B^2$ represents a single bond or a hydrocarbon group having 1 to 20 carbon atoms, $B^3$ represents an alkyl group having 1 to 20 carbon atoms, and "a" represents an integer of 1 to 10. When there are multiple $B^2$s and $B^3$s, each $B^2$ and $B^3$ is independent.

**[0078]** [Chem. 16]

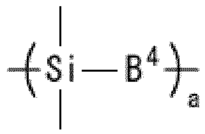

···· (IV)

In the general formula (IV), $B^4$ represents a single bond or a hydrocarbon group having 1 to 20 carbon atoms, and "a" represents an integer of 1 to 10. When there are multiple $B^4$s, each $B^4$ is independent.

[Chem. 17]

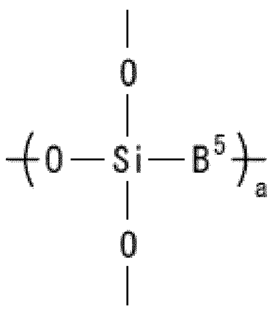

···· (V)

In the general formula (V), $B^5$ represents a single bond or a hydrocarbon group having 1 to 20 carbon atoms, and "a" represents an integer of 1 to 10. When there are multiple $B^5$s, each $B^5$ is independent.

Regarding $B^1$, $B^2$, $B^4$ and $B^5$ in the general formulas (II) to (V), examples of the hydrocarbon group having 1 to 20 carbon atoms include an alkylene group having 1 to 20 carbon atoms.

Preferably, in the general formula (I), A is represented by the general formula (II) or (III), and "k" represents 0.

More preferably, in the general formula (I), A is represented by the general formula (II) or (III) and "k" represents 0, and, in the general formula (II) or (III), "a" represents an integer of 2 to 10.

Still more preferably, in the general formula (I), A is represented by the general formula (II) and "k" represents 0, and, in the general formula (II), "a" represents an integer of 2 to 10.

Examples of the coupling agent include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine, among which tetrakis(3-trimethoxysilylpropyl)-1,3-propanediamine and tetrakis(3-trimethoxysilylpropyl)-1,3-bisaminomethylcyclohexane are particularly preferable.

The amount of the compound represented by the general formula (I) added as the coupling agent can be adjusted so that the reaction is performed with the mole number ratio between the styrene-butadiene copolymer and the coupling agent being set to a desired stoichiometric ratio. This tends to achieve the desired branching degree. Specifically, the mole number of the polymerization initiator with respect to the mole number of the coupling agent is preferably 5.0-fold mole or more and more preferably 6.0-fold mole or more. In this case, in the general formula (I), the number of functional groups $((m-1)\times i+p\times j+k)$ of the coupling agent is preferably an integer of 5 to 10 and more preferably an integer of 6 to 10.

To obtain the modified styrene-butadiene rubber containing the specific high molecular weight component, the molecular weight distribution (Mw/Mn) of the styrene-butadiene copolymer is preferably 1.5 or more and 2.5 or less, and more preferably 1.8 or more and 2.2 or less. A single peak is preferably detected in the molecular weight curve of the resultant modified styrene-butadiene rubber obtained by GPC.

When the peak molecular weight of the modified styrene-butadiene rubber measured by GPC is $Mp_1$, and the peak molecular weight of the styrene-butadiene copolymer is $Mp_2$, it is preferable that the following expression should be satisfied.

$$(Mp_1/Mp_2)<1.8\times10-12\times(Mp_2-120\times10^4)^2+2$$

$Mp_2$ is more preferably $20\times10^4$ or more and $80\times10^4$ or less, and $Mp_1$ is more preferably $30\times10^4$ or more and $150\times10^4$ or less. $Mp_1$ and $Mp_2$ are determined with the method described in the EXAMPLES section below.

The modification rate of the modified styrene-butadiene rubber is preferably 30 % by mass or more, more preferably 50 % by mass or more, and still more preferably 70 % by mass or more. When the modification rate is 30 % by mass or more, the low-loss properties and the wear resistance of the rubber composition can be further improved.

After the reaction process, a deactivator, a neutralizer, and the like may be optionally added to the copolymer solution. Examples of the deactivator include, but are not limited to, water; and alcohols such as methanol, ethanol, and isopropanol. Examples of the neutralizer include, but are not limited to, carboxylic acids such as stearic acid, oleic acid, and versatic acid (a mixture of highly branched carboxylic acids having a carbon number of 9 to 11, mainly a carbon number of 10); and an aqueous solution of an inorganic acid, and carbon dioxide.

From the viewpoint of preventing gel formation after the polymerization and improving stability in processing, an antioxidant is preferably added to the modified styrene-butadiene rubber. Examples of the antioxidant include 2,6-di-tert-butyl-4-hydroxytoluene (BHT), n-octadecyl-3-(4'-hydroxy-3',5'-di-tert-butylphenol)propionate, and 2-methyl-4,6-bis[(octylthio)methyl]phenol.

Any known method may be used as a method of collecting the modified styrene-butadiene rubber from the polymer solution. Examples of the method include a method by which the polymer is filtered off after separating the solvent by steam stripping or the like and the resultant is dehydrated and dried to collect the polymer, a method by which the solution is concentrated in a flashing tank and the resultant is devolatilized by a vent extruder or the like, and a method by which the solution is directly devolatilized using a drum dryer or the like.

The modified styrene-butadiene rubber obtained by reacting a coupling agent represented by the general formula (I) with a styrene-butadiene copolymer is, for example, represented by the following general formula (VI).

[Chem. 18]

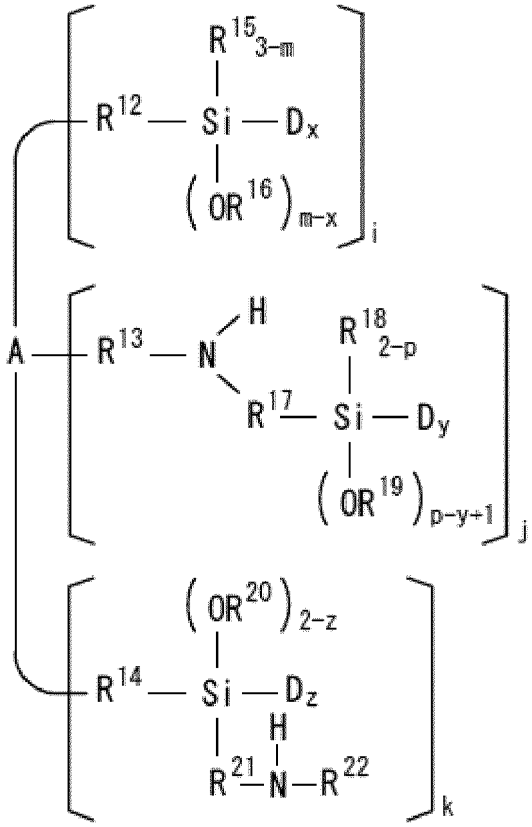

· · · · (VI)

In the general formula (VI), D represents a styrene-butadiene copolymer chain, and the weight-average molecular weight of the styrene-butadiene copolymer chain is preferably $10x10^4$ to $100\times10^4$. The styrene-butadiene copolymer chain is a structural unit of the modified styrene-butadiene rubber, and is, for example, a structural unit derived from a styrene-butadiene copolymer produced by reacting a styrene-butadiene copolymer with a coupling agent.

$R^{12}$, $R^{13}$ and $R^{14}$ each independently represent a single bond or an alkylene group having 1 to 20 carbon atoms.

$R^{15}$ and $R^{18}$ each independently represent an alkyl group having 1 to 20 carbon atoms.

$R^{16}$, $R^{19}$, and $R^{20}$ each independently represent a hydrogen atom or an alkyl group having 1 to 20 carbon atoms.

$R^{17}$ and $R^{21}$ each independently represent an alkylene group having 1 to 20 carbon atoms.

$R^{22}$ represents a hydrogen atom or an alkyl group having 1 to 20 carbon atoms.

In the general formula (VI), "m" and "x" each represent an integer of 1 to 3 where $x \leq m$, p represents 1 or 2, y represents an integer of 1 to 3 where $y \leq (p+1)$, and z represents an integer of 1 or 2.

When there are multiple Ds, $R^{12}$s to $R^{21}$s, "m"s, "p"s, "x"s, "y"s, and "z"s, they are each independent and may be the same as or different from each other

Further, "i" represents an integer of 0 to 6, "j" represents an integer of 0 to 6, "k" represents an integer of 0 to 6, where (i+j+k) is an integer of 3 to 10, and $((x\times i)+(y\times j)+(z\times k))$ represents an integer of 5 to 30.

Further, A represents a hydrocarbon group having 1 to 20 carbon atoms, or an organic group having 1 to 20 carbon atoms, having at least one type of atom selected from the group consisting of an oxygen atom, a nitrogen atom, a silicon atom, a sulfur atom and a phosphorus atom, and having no active hydrogen. The hydrocarbon group represented by A includes saturated, unsaturated, aliphatic, and aromatic hydrocarbon groups. Examples of the organic group having no active hydrogen include an organic group not containing a functional group having active hydrogen such as hydroxyl group (-OH), secondary amino group (>NH), primary amino group ($-NH_2$), and sulfhydryl group (-SH).

In the general formula (VI), A is preferably represented by any one of the general formulas (II) to (V). When A is represented by any one of the general formulas (II) to (V), the low-loss properties and the wear resistance of the rubber composition can be further improved.

--Modified styrene-butadiene rubber of third preferred embodiment--

It is also preferable that at least one terminal of the styrene-butadiene rubber (SBR) should be modified with a modifying agent containing a compound (alkoxysilane) represented by the following general formula (1).

[Chem. 19]

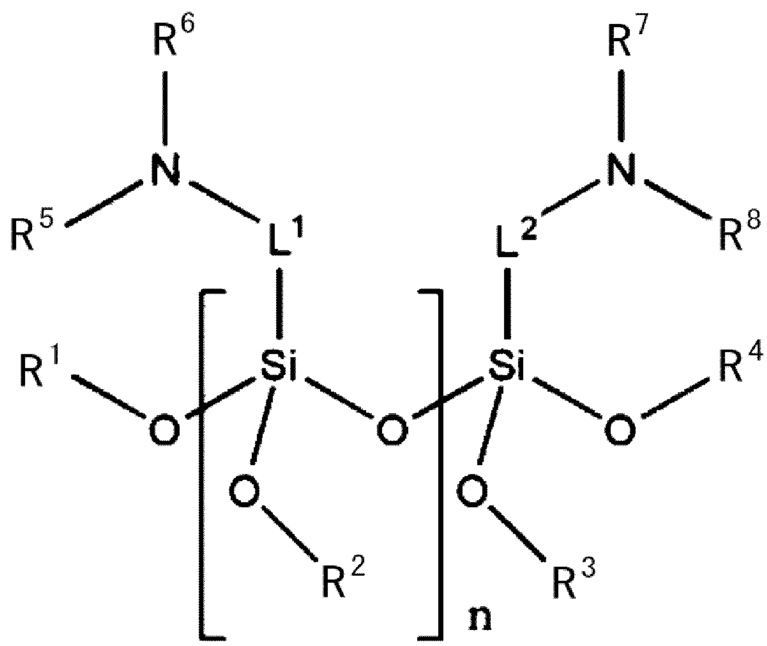

· · · · (1)

By using a styrene-butadiene rubber modified with a modifying agent containing a compound represented by the general formula (1) containing oligosiloxane and a tertiary amino group, which are filler-affinity functional groups, as the rubber component, the dispersibility of a filler such as silica can be improved. As a result, the dispersibility of the filler in the rubber composition of the present disclosure improves, which significantly improves the low-loss properties, reduces the rolling resistance of a tire using the rubber composition, and improves the fuel efficiency.

In the general formula (1), $R^1$ to $R^8$ are each independently an alkyl group having 1 to 20 carbon atoms; $L^1$ and $L^2$ are each independently an alkylene group having 1 to 20 carbon atoms; and "n" is an integer of 2 to 4.

Specifically, in the formula (1), $R^1$ to $R^4$ may each independently be a substituted or unsubstituted alkyl group having 1 to 20 carbon atoms, and when the $R^1$ to $R^4$ are substituted, they may each independently be substituted with at least one substituent selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl group having 6 to 12 carbon atoms, an aryloxy group having 6 to 12 carbon atoms, an alkanoyloxy group having 2 to 12 carbon atoms (Ra-COO-, where Ra is an alkyl group having 1 to 9 carbon atoms), an aralkyloxy group having 7 to 13 carbon atoms, an arylalkyl group having 7 to 13 carbon atoms, and an alkylaryl group having 7 to 13 carbon atoms.

More specifically, the $R^1$ to $R^4$ may be substituted or unsubstituted alkyl groups having 1 to 10 carbon atoms, and even more specifically, the $R^1$ to $R^4$ may each independently be a substituted or unsubstituted alkyl group having 1 to 6 carbon atoms.

In the formula (1), $R^5$ to $R^8$ are each independently a substituted or unsubstituted alkyl group having 1 to 20 carbon atoms. Specifically, they may each independently be a substituted or unsubstituted alkyl group having 1 to 10 carbon atoms. More specifically, they may each independently be a substituted or unsubstituted alkyl group having 1 to 6 carbon atoms, and when substituted, they may be substituted with the substituents described above for $R^1$ to $R^4$.

When the $R^5$ to $R^8$ are not alkyl groups but hydrolyzable substituents, the N-$R^5R^6$ and N-$R^7R^8$ bonds are hydrolyzed to N-H in the presence of water, which may adversely affect the processability of a polymer.

More specifically, in the compound represented by the formula (1), $R^1$ to $R^4$ may be a methyl group or an ethyl group, and $R^5$ to $R^8$ may be an alkyl group having 1 to 10 carbon atoms.

The amino groups in the compound represented by the formula (1), that is, N-$R^5R^6$ and N-$R^7R^8$, are preferably tertiary amino groups. The tertiary amino group allows the compound represented by the formula (1) to have even better processability when used as a modifying agent.

If a protecting group for protecting the amino group, or hydrogen is bonded to the $R^5$ to $R^8$, it may be difficult to realize the effect of the compound represented by the formula (1). When hydrogen is bonded, the anion reacts with hydrogen in the modification process and loses reactivity, rendering the modification reaction impossible. When a protecting group is bonded, the modification reaction is carried out, but while it is bonded to a polymer terminal, deprotection occurs due to hydrolysis during subsequent processing to obtain a primary or secondary amino group, and the deprotected primary or secondary amino group may increase the viscosity of a compound during subsequent compounding, leading to a decrease in processability.

In the compound represented by the formula (1), $L^1$ and $L^2$ are each independently a substituted or unsubstituted alkylene group having 1 to 20 carbon atoms.

More specifically, $L^1$ and $L^2$ are each independently an alkylene group having 1 to 10 carbon atoms. More specifically, $L^1$ and $L^2$ may each independently be an alkylene group having 1 to 6 carbon atoms such as a methylene group, an ethylene group, or a propylene group.

Regarding the $L^1$ and $L^2$ in the compound represented by the formula (1), as the distance between the Si atom and the N atom in the molecule decreases, the effect increases. However, when Si is directly bonded to N, the bond between Si and N may be broken during subsequent treatment processes, and a secondary amino group formed in this case is likely to be lost by water during subsequent treatment. Therefore, in a modified styrene-butadiene rubber thus obtained, it is difficult to bond to a filler by an amino group which promotes the bonding to a filler such as silica. As a result, the effect of improving the dispersibility of the filler may be deteriorated. Considering the improvement effect due to the length of the bond between Si and N, the $L^1$ and $L^2$ are more preferably each independently an alkylene group having 1 to 3 carbon atoms such as a methylene group, an ethylene group, or a propylene group. More specifically, they may each independently be a propylene group. Further, $L^1$ and $L^2$ may be substituted with the substituents described above for $R^1$ to $R^4$.

The compound represented by the formula (1) is preferably any one of the compounds represented by the following structural formulas (1-1) to (1-5), for example. This is because better low-loss properties can be achieved this case.

[Chem. 20]

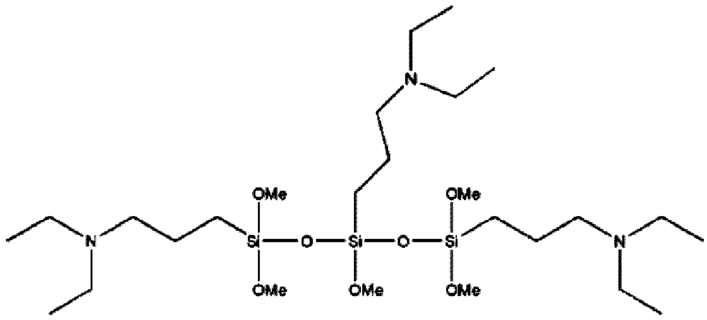

· · · · · (1-1)

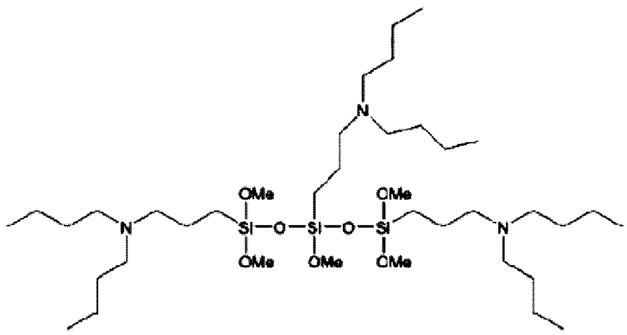

· · · · · (1-2)

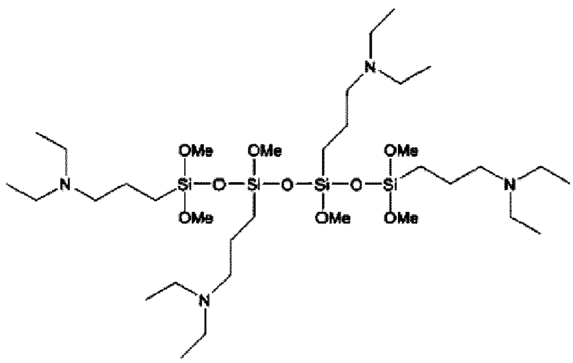

· · · · · (1-3)

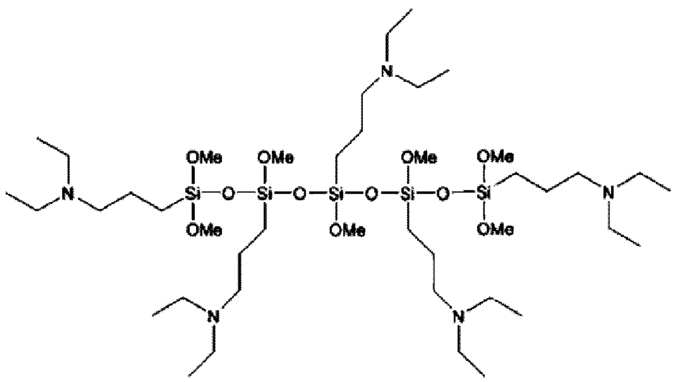

· · · · · (1-4)

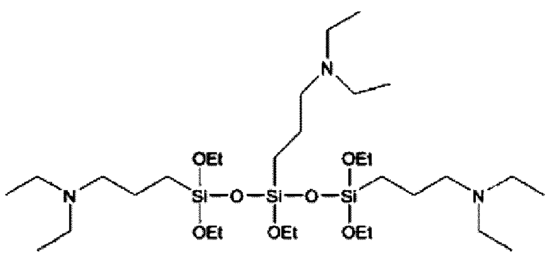

· · · · · (1-5)

The compound represented by the formula (1) is such that an alkoxysilane structure is bonded to an active terminal of a styrene-butadiene copolymer, while a Si-O-Si structure and three or more amino groups bonded to the terminal exhibit an affinity for a filler such as silica, so that the bonding between the filler and the modified styrene-butadiene rubber can be promoted as compared with a conventional modifying agent containing one amino group in the molecular. Further, the degree of bonding of the active terminal of the styrene-butadiene copolymer is uniform. When the change in molecular weight distribution is observed before and after coupling, it is found that the molecular weight distribution is constant without becoming larger after coupling than that before coupling. Therefore, there is no deterioration in physical properties of the modified styrene-butadiene rubber itself, aggregate of the filler in the rubber composition can be prevented, and the dispersibility of the filler can be increased. As a result, the processability of the rubber composition can be improved. These effects make it possible to particularly improve fuel efficiency and wet grip performance in a well-balanced manner when the rubber composition is applied to a tire.

The compound represented by the formula (1) can be produced through a condensation reaction represented by the following reaction scheme.

[Chem. 21]

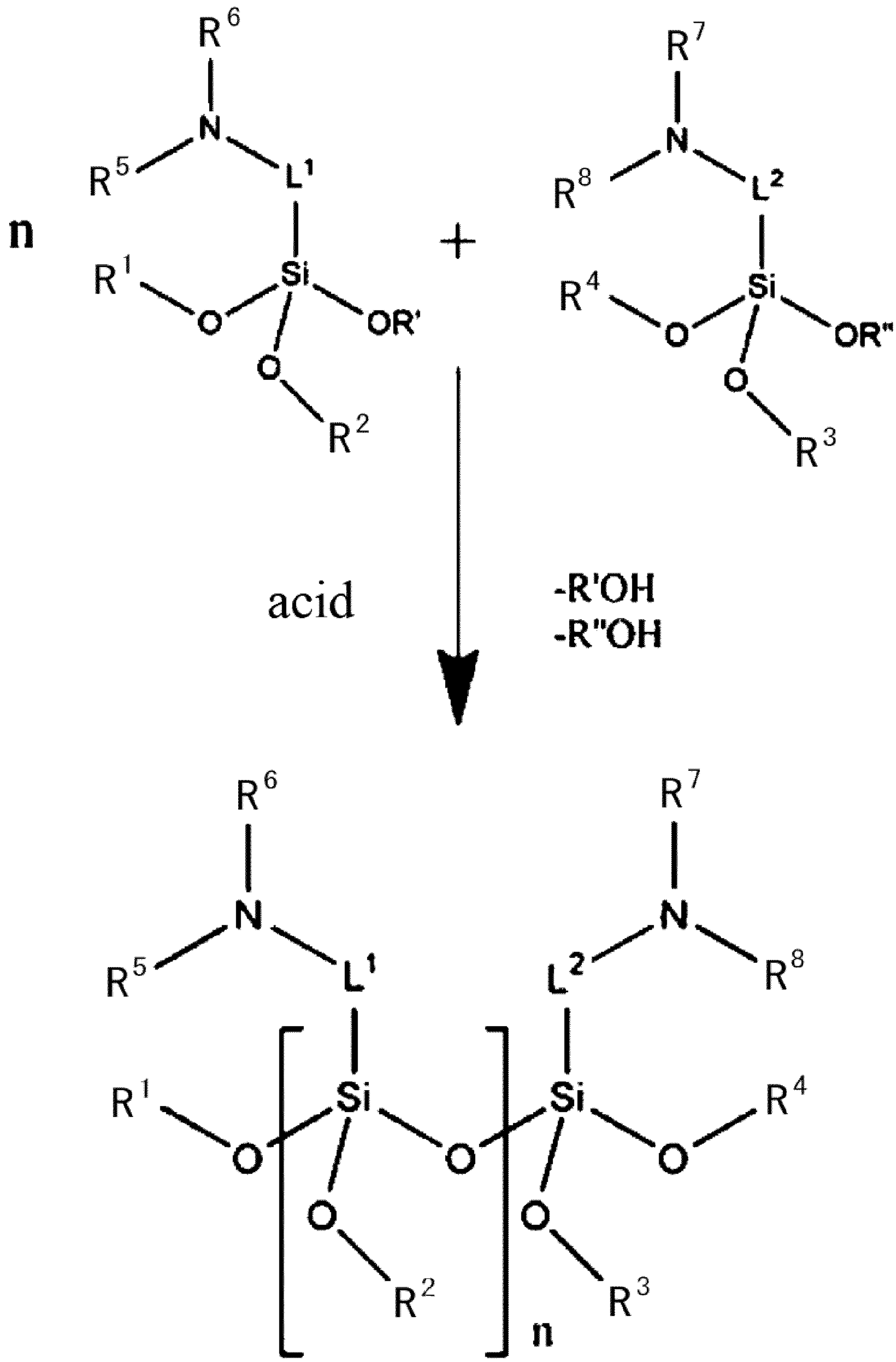


In the reaction scheme, $R^1$ to $R^8$, $L^1$ and $L^2$, and "n" are the same as those defined in the formula (1) above, and R' and R" are optional substituents that do not affect the condensation reaction. For example, the R' and R" may each independently be the same as any one of $R^1$ to $R^4$.

The reaction of the reaction scheme proceeds under acid conditions, and any acid can be used without limitation as long as it is generally used in a condensation reaction. A person skilled in the art can select the most suitable acid according to various process variables such as the type of reactor in which the reaction is carried out, starting materials,

and the reaction temperature.

The styrene-butadiene rubber modified with a modifying agent containing a compound represented by the formula (1) may have a narrow molecular weight distribution (Mw/Mn, also referred to as "polydispersity index (PDI)") of 1.1 to 3.0. When the molecular weight distribution of the modified styrene-butadiene rubber is more than 3.0 or less than 1.1, tensile properties and viscoelasticity may deteriorate when applied to a rubber composition. Considering the remarkable effect of improving tensile properties and viscoelasticity by controlling the molecular weight distribution of the modified styrene-butadiene rubber, the molecular weight distribution of the modified styrene-butadiene rubber is preferably in a range of 1.3 to 2.0. By using the modifying agent, the modified styrene-butadiene rubber has a molecular weight distribution similar to that of the styrene-butadiene copolymer before modification.

The molecular weight distribution of the modified styrene-butadiene rubber may be calculated from a ratio (Mw/Mn) of weight-average molecular weight (Mw) to number-average molecular weight (Mn). At this time, the number-average molecular weight (Mn) is a common average of individual polymer molecular weights calculated by measuring the molecular weight of n polymer molecules, determining the sum of these molecular weights, and dividing the sum by n, and the weight-average molecular weight (Mw) represents the molecular weight distribution of the polymer composition. The average of the total molecular weight can be expressed in grams per mole (g/mol).

The weight-average molecular weight and the number-average molecular weight are each a polystyrene-equivalent molecular weight analyzed by gel permeation chromatography (GPC).

The modified styrene-butadiene rubber satisfies the above-described conditions of molecular weight distribution. At the same time, the number-average molecular weight (Mn) is 50,000 g/mol to 2,000,000 g/mol, and more specifically, it can be 200,000 g/mol to 800,000 g/mol. The weight-average molecular weight (Mw) of the modified styrene-butadiene rubber is 100,000 g/mol to 4,000,000 g/mol, and more specifically, it can be 300,000 g/mol to 1,500,000 g/mol.

When the weight-average molecular weight (Mw) of the modified styrene-butadiene rubber is 100,000 g/mol or when the number-average molecular weight (Mn) is less than 50,000 g/mol, tensile properties may deteriorate when applied to the rubber composition. When the weight-average molecular weight (Mw) exceeds 4,000,000 g/mol or the number-average molecular weight (Mn) exceeds 2,000,000 g/mol, the workability of the rubber composition deteriorates due to the deterioration in the processability of the modified styrene-butadiene rubber, which renders kneading difficult and may render it difficult to sufficiently improve the physical properties of the rubber composition.

More specifically, when the modified styrene-butadiene rubber simultaneously satisfies the conditions of the weight-average molecular weight (Mw), the number-average molecular weight (Mn) as well as the molecular weight distribution and it is applied to a rubber composition, the viscoelasticity and the processability of the rubber composition can be improved in a well-balanced manner.

The modified styrene-butadiene rubber preferably has a vinyl bond content of the butadiene moiety of 5 % or more and more preferably 10 % or more, and preferably 60 % or less. By setting the vinyl bond content in the butadiene moiety within the above range, the glass transition temperature can be adjusted to an appropriate range.

The modified styrene-butadiene rubber may have a Mooney viscosity (MV) of 40 to 140, specifically 60 to 100, at 100 °C. When it has a Mooney viscosity within the above range, it can exhibit better processability.

The Mooney viscosity can be measured with a Mooney viscometer, such as MV2000E of Monsanto Company, using a large rotor at 100 °C and a rotor speed of 2±0.02 rpm. The sample used at this time is left at room temperature (23 ±3 °C) for 30 minutes or longer. Next, 27±3 g of the sample is collected and filled into the inside of a die cavity, and then a platen is operated to perform the measurement.

As described above, one terminal of the modified styrene-butadiene rubber is preferably modified with a modifying agent containing a compound represented by the general formula (1), and the other terminal of the modified styrene-butadiene rubber is preferably further modified with a modifying agent containing a compound represented by the following general formula (2). By modifying both terminals of the modified styrene-butadiene rubber, the dispersibility of the filler in the rubber composition is further improved, and both the fuel efficiency and the wet grip performance of a tire using the rubber composition can be achieved at a higher level.

[Chem. 22]

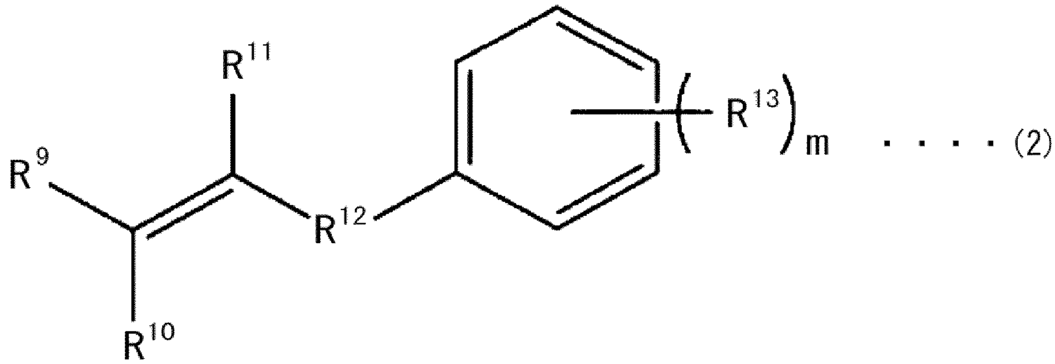

In the general formula (2), $R^9$ to $R^{11}$ are each independently hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms, a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

Further, in the formula (2), $R^{12}$ is a single bond; an alkylene group having 1 to 20 carbon atoms substituted or unsubstituted with a substituent; a cycloalkylene group having 5 to 20 carbon atoms substituted or unsubstituted with a substituent; or an arylene group having 5 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms.

Further, in the formula (2), $R^{13}$ is an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or a functional group represented by the following general formula (2a) or general formula (2b), where "m" is an integer of 1 to 5, at least one $R^{13}$ is a functional group represented by the following general formula (2a) or general formula (2b), and when "m" is an integer of 2 to 5, a plurality of $R_5$s may be the same or different from each other.

[Chem. 23]

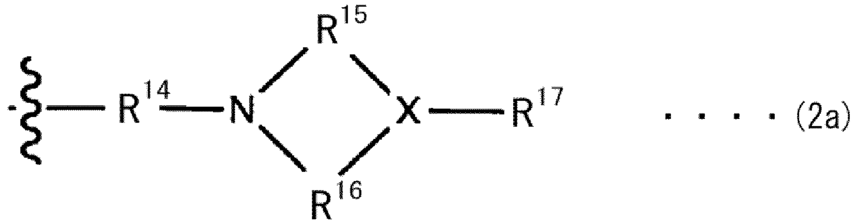

In the general formula (2a), $R^{14}$ is an alkylene group having 1 to 20 carbon atoms substituted or unsubstituted with a substituent; a cycloalkylene group having 5 to 20 carbon atoms substituted or unsubstituted with a substituent; or an arylene group having 6 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms.

Further, in the formula (2a), $R^{15}$ and $R^{16}$ are each independently an alkyl group having 1 to 10 carbon atoms, a cycloalkyl group having 5 to 10 carbon atoms, or an alkylene group having 1 to 20 carbon atoms substituted or unsubstituted with an aryl group having 6 to 20 carbon atoms.

Further, in the formula (2a), $R^{17}$ is hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, X is a N, O or S atom, and when X is O or S, there is no $R^{17}$.

[Chem. 24]

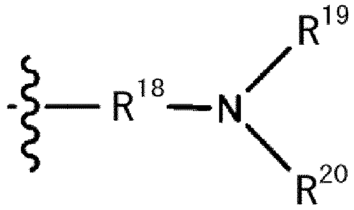

· · · · (2b)

In the formula (2b), $R^{18}$ is an alkylene group having 1 to 20 carbon atoms substituted or unsubstituted with a substituent; a cycloalkylene group having 5 to 20 carbon atoms substituted or unsubstituted with a substituent; or an arylene group having 6 to 20 carbon atoms substituted or unsubstituted with a substituent, where the substituent is an alkyl group having 1 to 10 carbon atoms, a cycloalkyl group having 5 to 10 carbon atoms, or an aryl group having 6 to 20 carbon atoms

In the formula (2b), $R^{19}$ and $R^{20}$ are each independently an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

In the compound represented by the formula (2), $R^9$ to $R^{11}$ are each independently hydrogen; an alkyl group having 1 to 10 carbon atoms; an alkenyl group having 2 to 10 carbon atoms; or an alkynyl group having 2 to 10 carbon atoms, $R^{12}$ is a single bond; or an unsubstituted alkylene group having 1 to 10 carbon atoms, $R^{13}$ is an alkyl group having 1 to 10 carbon atoms; an alkenyl group having 2 to 10 carbon atoms; an alkynyl group having 2 to 10 carbon atoms; or a functional group represented by the following general formula (2a) or general formula (2b), in the general formula (2a), $R^{14}$ is an unsubstituted alkylene group having 1 to 10 carbon atoms, $R^{15}$ and $R^{16}$ are each independently an unsubstituted alkylene group having 1 to 10 carbon atoms; $R^{17}$ is an alkyl group having 1 to 10 carbon atoms; a cycloalkyl group having 5 to 20 carbon atoms; an aryl group having 6 to 20 carbon atoms; or a heterocyclic group having 3 to 20 carbon atoms, in the general formula (2b), $R^{18}$ is an unsubstituted alkylene group having 1 to 10 carbon atoms; and $R^{19}$ and $R^{20}$ may each independently be an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compound represented by the formula (2) may be a compound represented by the following structural formulas (2-1) to (2-3).

[Chem. 25]

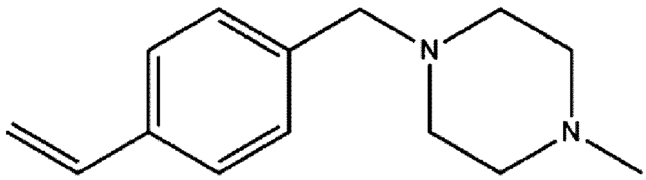

・・・・(2-1)

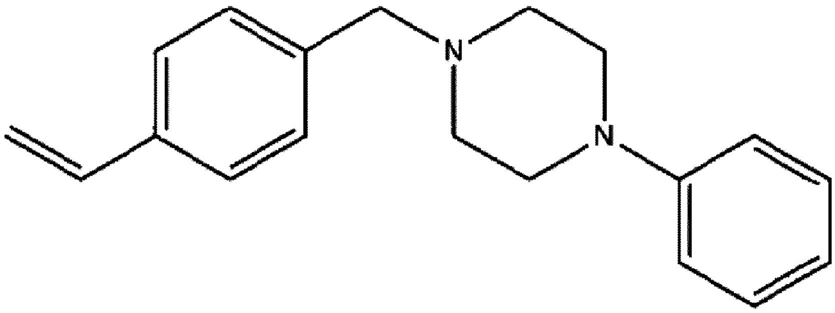

・・・・(2-2)

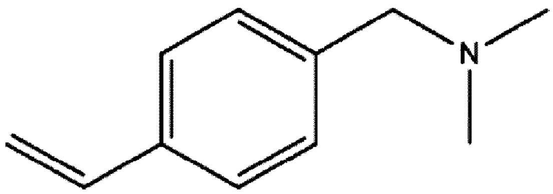

・・・・(2-3)

When the styrene-butadiene copolymer is modified with a modifying agent containing a compound represented by the general formula (2), the modifying agent containing a compound represented by the formula (2) is used as a modification initiator.

Specifically, for example, by polymerizing a butadiene monomer and a styrene monomer in the presence of a modifying agent containing a compound represented by the formula (2) in a hydrocarbon solvent, a modified group derived from the compound represented by the formula (2) can be imparted to the styrene-butadiene copolymer.

-Other rubber components-

In addition to the diene-based rubber component A and the diene-based rubber component B described above, the rubber component may further contain another rubber (another rubber component), and the content of the other rubber component in the rubber component is preferably 35 % by mass or less. Examples of the other rubber component include chloroprene rubber (CR), butyl rubber (IIR), halogenated butyl rubber, ethylene-propylene rubber (EPR, EPDM), fluororubber, silicone rubber, and urethane rubber. Among the above, a diene-based rubber such as butadiene rubber (BR) and chloroprene rubber (CR) are preferred, and butadiene rubber (BR) is more preferred.

The butadiene rubber (BR) is preferably high-cis polybutadiene, where the high-cis polybutadiene preferably has a cis-1,4 bond content of 90 % by mass or more. When the rubber component contains butadiene rubber, the content of the butadiene rubber is preferably in a range of 1 part by mass to 35 parts by mass with respect to 100 parts by mass of the rubber component.

(Resin component)

The rubber composition for tire of the present disclosure further contains a resin component in addition to the rubber component.

The resin component has a weight-average molecular weight (Mw) of 200 g/mol to 1600g/mol. As used herein, the weight-average molecular weight is a polystyrene-equivalent weight-average molecular weight (g/mol). When the molecular weight of the resin component is 200 g/mol or more, the resin component hardly precipitates from a tire, and the

effect of the resin component can be sufficiently exhibited. When the molecular weight is 1600 g/mol or less, the resin component is easily compatible with the rubber component.

From the viewpoint of suppressing precipitation of the resin component from a tire and suppressing the deterioration of the tire appearance, the polystyrene-equivalent weight-average molecular weight of the resin component is preferably 500 g/mol or more, more preferably 550 g/mol or more, more preferably 600 g/mol or more, more preferably 650 g/mol or more, and still more preferably 700 g/mol or more. Further, from the viewpoint of improving the compatibility of the resin component to the rubber component and further improving the effect of the resin component, the polystyrene-equivalent weight-average molecular weight of the resin component is preferably 1570 g/mol or less, more preferably 1530 g/mol or less, more preferably 1500 g/mol or less, more preferably 1470 g/mol or less, more preferably 1430 g/mol or less, more preferably 1400 g/mol or less, more preferably 1370 g/mol or less, more preferably 1330 g/mol or less, more preferably 1300 g/mol or less, more preferably 1250 g/mol or less, more preferably 1200 g/mol or less, more preferably 1150 g/mol or less, more preferably 1100 g/mol or less, more preferably 1050 g/mol or less, more preferably 1000 g/mol or less, and still more preferably 950 g/mol or less.

The resin component is preferably at least partially hydrogenated. When the resin component is at least partially hydrogenated, the compatibility with the diene-based rubber component A such as the isoprene skeleton rubber can be increased, the mobility of the rubber component can be controlled, and the hysteresis loss (tanδ) in the low temperature region can be improved. As a result, the wet grip performance of a tire using the rubber composition is improved.

From the same viewpoint, the resin component has a difference in SP value of 1.40 $(cal/cm^3)^{1/2}$ or less from the isoprene skeleton rubber, and it preferably satisfies the following expression:

$$\text{mass ratio of the resin component/the isoprene skeleton rubber} \geq 0.5$$

From the viewpoint of further improving the compatibility, the difference in SP value between the resin component and the isoprene skeleton rubber is preferably 1.40 $(cal/cm^3)^{1/2}$ or less, preferably 1.35 $(cal/cm^3)^{1/2}$ or less, preferably 0.45 $(cal/cm^3)^{1/2}$ or less, preferably 0.3 $(cal/cm^3)^{1/2}$ or less, and more preferably 0.25 $(cal/cm^3)^{1/2}$ or less.

When the mass ratio of the resin component to the isoprene skeleton rubber [mass ratio of the resin component/the isoprene skeleton rubber] is 0.5 or more, the strain energy loss of the polymer phase including the isoprene skeleton rubber and the resin component is increased, so that the wet grip performance of a tire using the rubber composition can be further improved. The mass ratio of the resin component to the isoprene skeleton rubber [mass ratio of the resin component/the isoprene skeleton rubber] is preferably 0.65 or more, more preferably 0.7 or more, and still more preferably 0.8 or more, and it is preferably 2.0 or less, more preferably 1.9 or less, and still more preferably 1.8 or less.

The resin component preferably has a softening point higher than 110 °C. By applying a rubber composition containing such a resin component to a tire, the wear resistance of the tire can be further improved.

When the softening point of the resin component is higher than 110 °C, a tire using the rubber composition can be sufficiently reinforced, and the wear resistance can be further improved. From the same viewpoint, the softening point of the resin component is preferably 116 °C or higher, more preferably 120 °C or higher, still more preferably 123 °C or higher, and particularly preferably 127 °C or higher. Further, from the viewpoint of wet grip performance and processability, the softening point of the resin component is preferably 160 °C or lower, more preferably 150 °C or lower, more preferably 145 °C or lower, more preferably 141 °C or lower, and particularly preferably 136 °C or lower.

A ratio ($Ts_{HR}/Mw_{HR}$) of the softening point ($Ts_{HR}$) (unit: °C) of the resin component to the polystyrene-equivalent weight-average molecular weight ($Mw_{HR}$) (unit: g/mol) of the resin component is preferably 0.07 or more, more preferably 0.083 or more, more preferably 0.095 or more, more preferably 0.104 or more, more preferably 0.125 or more, more preferably 0.135 or more, more preferably 0.14 or more, and still more preferably 0.141 or more. Further, the ratio ($Ts_{HR}/Mw_{HR}$) is preferably 0.25 or less, preferably 0.24 or less, preferably 0.23 or less, preferably 0.19 or less, more preferably 0.18 or less, and still more preferably 0.17 or less.

The softening point and the polystyrene-equivalent weight-average molecular weight of the resin component can be determined with the method described in the EXAMPLES section below.

The content of the resin component is 1 part by mass to 45 parts by mass with respect to 100 parts by mass of the rubber component. When the content of the resin component in the rubber composition is 1 part by mass or more with respect to 100 parts by mass of the rubber component, the effect of the resin component is sufficiently exhibited. When the content is 45 parts by mass or less, the resin component hardly precipitates from a tire, and the effect of the resin component can be sufficiently exhibited. On the other hand, when the content of the resin component exceeds 45 parts by mass with respect to 100 parts by mass of the rubber component, the fuel efficiency and the wear resistance of a tire using the rubber composition deteriorate. From the viewpoint of further improving the effect of the resin component, the content of the resin component in the rubber composition is preferably 5 parts by mass or more, more preferably 7 parts by mass or more, and still more preferably 9 parts by mass or more, with respect to 100 parts by mass of the rubber component. From the viewpoint of suppressing precipitation of the resin component from a tire and suppressing the deterioration of the tire

appearance, the content of the resin component in the rubber composition is more preferably 40 parts by mass or less, still more preferably 35 parts by mass or less, and even more preferably 30 parts by mass or less, with respect to 100 parts by mass of the rubber component.

The above-described resin component which is at least partially hydrogenated means a resin obtained by reductive hydrogenation of a resin.

Examples of a resin serving as a raw material for the hydrogenated resin component include a $C_5$-based resin, a $C_5$-$C_9$-based resin, a $C_9$-based resin, a terpene-based resin, a dicyclopentadiene-based resin, and a terpene-aromatic compound-based resin. These resins may be used alone or in combination of two or more.

Examples of the $C_5$-based resin include an aliphatic petroleum resin obtained by (co)polymerizing a $C_5$ fraction obtained by pyrolysis of naphtha in the petrochemical industry.

The $C_5$ fraction usually includes olefin-based hydrocarbon such as 1-pentene, 2-pentene, 2-methyl-1-butene, 2-methyl-2-butene, or 3-methyl-1-butene; diolefin-based hydrocarbon such as 2-methyl-1,3-butadiene, 1,2-pentadiene, 1,3-pentadiene, or 3-methyl-1,2-butadiene; or the like. Commercially available products can be used as the $C_5$-based resin.

The $C_5$-$C_9$-based resin refers to a $C_5$-$C_9$-based synthetic petroleum resin, and examples of the $C_5$-$C_9$-based resin include a solid polymer obtained by polymerizing a $C_5$-$C_{11}$ fraction derived from petroleum using a Friedel-Crafts catalyst such as $AlCl_3$ or $BF_3$. More specifically, examples thereof include copolymers containing styrene, vinyltoluene, $\alpha$-methylstyrene, indene, and the like as main components.

The $C_5$-$C_9$-based resin is preferably a resin containing a small amount of $C_9$ or higher component from the viewpoint of the compatibility with the rubber component. As used herein, the words "a small amount of $C_9$ or higher component" mean that the $C_9$ or higher component in the total amount of the resin is less than 50 % by mass, preferably 40 % by mass or less. Commercially available products can be used as the $C_5$-$C_9$-based resin.

The $C_9$-based resin refers to a $C_9$-based synthetic petroleum resin, and it is a solid polymer obtained by polymerizing a $C_9$ fraction using a Friedel-Crafts type catalyst such as $AlCl_3$ or $BF_3$, for example.

Examples of the $C_9$-based resin include copolymers containing indene, $\alpha$-methylstyrene, vinyltoluene, and the like as main components.

The terpene-based resin is a solid-state resin obtained by compounding turpentine oil, which is obtained simultaneously when obtaining rosin from pine trees, or a polymerizable component separated from the turpentine oil, and then polymerizing the turpentine oil or the polymerizable component using a Friedel-Crafts catalyst. Examples thereof include a $\beta$-pinene resin and a $\alpha$-pinene resin. A typical example of the terpene-aromatic compound-based resin is a terpene-phenol resin. The terpene-phenol resin may be obtained with a method of causing terpenes to react with various phenols using a Friedel-Crafts catalyst, or further condensing the resultant with formalin. The terpenes as a raw material are not particularly limited, but they are preferably monoterpene hydrocarbon such as $\alpha$-pinene and limonene, more preferably terpenes containing $\alpha$-pinene, and particularly preferably $\alpha$-pinene. Styrene or the like may be contained in the skeleton.

The dicyclopentadiene-based resin refers to, for example, a resin obtained by polymerizing dicyclopentadiene using a Friedel-Crafts catalyst such as $AlCl_3$ or $BF_3$.

A resin serving as a raw material for the hydrogenated resin component may include, for example, a resin obtained by copolymerizing a $C_5$ fraction and dicyclopentadiene (DCPD) ($C_5$-DCPD-based resin).

When a dicyclopentadiene-derived component is 50 % by mass or more in the total amount of the resin, the $C_5$-DCPD-based resin is included in the dicyclopentadiene-based resin. When the dicyclopentadiene-derived component is less than 50 % by mass in the total amount of the resin, the $C_5$-DCPD-based resin is included in the $C_5$-based resin. The same applies to a case where a small amount of a third component or the like is further contained.

From the viewpoint of improving the compatibility between the rubber component and the resin component, further improving the wet grip performance of a tire using the rubber composition, and further reducing the rolling resistance, the resin component is preferably at least one selected from the group consisting of a hydrogenated $C_5$-based resin, a hydrogenated $C_5$-$C_9$-based resin, a hydrogenated dicyclopentadiene-based resin (hydrogenated DCPD-based resin), and a hydrogenated terpene-based resin, more preferably at least one selected from the group consisting of a hydrogenated $C_5$-based resin and a hydrogenated $C_5$-$C_9$-based resin, and still more preferably a hydrogenated $C_5$-based resin. Further, it is preferably a resin having a hydrogenated DCPD structure or a hydrogenated cyclic structure at least in its monomer.

(Filler)

The rubber composition for tire of the present disclosure contains a filler. By containing a filler, the reinforcing properties of the rubber composition is improved.

The content of the filler in the rubber composition is preferably in a range of 40 parts by mass to 100 parts by mass with respect to 100 parts by mass of the rubber component. When the content of the filler in the rubber composition is 40

parts by mass or more with respect to 100 parts by mass of the rubber component, a tire using the rubber composition is sufficiently reinforced, and the wear resistance can be further improved. When the content is 100 parts by mass or less, the elastic modulus of the rubber composition is not too high, and the wet grip performance of a tire using the rubber composition is further improved. From the viewpoint of further reducing the rolling resistance of the tire (from the viewpoint of improving the fuel efficiency), the content of the filler in the rubber composition is preferably 45 parts by mass or more, more preferably 50 parts by mass or more, and still more preferably 55 parts by mass or more, with respect to 100 parts by mass of the rubber component. Further, from the viewpoint of improving the wet grip performance of the tire, the content of the filler in the rubber composition is preferably 95 parts by mass or less, and more preferably 90 parts by mass or less, with respect to 100 parts by mass of the rubber component.

The filler preferably contains silica and more preferably contains silica having a nitrogen adsorption specific surface area (BET method) of 100 $m^2/g$ or more and less than 330 $m^2/g$. When the nitrogen adsorption specific surface area (BET method) of the silica is 100 $m^2/g$ or more, a tire using the rubber composition can be sufficiently reinforced, and the rolling resistance of the tire can be further reduced. When the nitrogen adsorption specific surface area (BET method) of the silica is less than 330 $m^2/g$, the elastic modulus of the rubber composition is not too high, and the wet grip performance of a tire using the rubber composition is further improved. From the viewpoint of further reducing the rolling resistance and further improving the wear resistance of the tire, the nitrogen adsorption specific surface area (BET method) of the silica is preferably 110 $m^2/g$ or more, more preferably 130 $m^2/g$ or more, still more preferably 150 $m^2/g$ or more, and even more preferably 180 $m^2/g$ or more. Further, from the viewpoint of further improving the wet grip performance of the tire, the nitrogen adsorption specific surface area (BET method) of the silica is preferably 300 $m^2/g$ or less, more preferably 280 $m^2/g$ or less, and still more preferably 270 $m^2/g$ or less.

Examples of the silica include wet silica (hydrous silicate), dry silica (anhydrous silicate), calcium silicate, and aluminum silicate, among which wet silica is preferred. These silicas may be used alone or in combination of two or more.

From the viewpoint of improving the mechanical strength of the tire and further improving the wear resistance, the content of silica in the rubber composition is preferably 40 parts by mass or more, more preferably 45 parts by mass or more, more preferably 50 parts by mass or more, and still more preferably 55 parts by mass or more, with respect to 100 parts by mass of the rubber component. From the viewpoint of further improving the wet grip performance of the tire, the content of silica in the rubber composition is preferably 125 parts by mass or less, more preferably 105 parts by mass or less, more preferably 100 parts by mass or less, and still more preferably 95 parts by mass or less, with respect to 100 parts by mass of the rubber component.

The filler preferably contains carbon black. The carbon black can reinforce the rubber composition to improve the wear resistance of the rubber composition.

The carbon black is not particularly limited, and examples thereof include GPF, FEF, HAF, ISAF, and SAF grade carbon black. These carbon black products may be used alone or in combination of two or more.

From the viewpoint of improving the wear resistance of the rubber composition and a tire using the rubber composition, the content of carbon black in the rubber composition is preferably 1 part by mass or more, more preferably 3 parts by mass or more, and still more preferably 5 parts by mass or more, with respect to 100 parts by mass of the rubber component. Further, from the viewpoint of the workability of the rubber composition, the content of carbon black in the rubber composition is preferably 20 parts by mass or less and more preferably 15 parts by mass or less, with respect to 100 parts by mass of the rubber component.

When the filler contains silica and carbon black, the proportion of silica in the total amount of silica and carbon black is preferably 80 % by mass or more and less than 100 %, and more preferably 90 % by mass or more and less than 100 %. When the proportion of silica is 80 % by mass or more, the mechanical strength of a tire using the rubber composition is improved, and the rolling resistance can be further reduced.

-Other fillers-

In addition to silica and carbon black, the filler may contain inorganic fillers such as clay, talc, calcium carbonate, and aluminum hydroxide, for example.

The other fillers described above is preferably contained in such a range that the proportion of silica in the filler is 70 % by mass or more. When the proportion of silica in the filler is 70 % by mass or more, the mechanical strength of a tire using the rubber composition is improved, and the rolling resistance can be further reduced. The proportion of silica in the filler is more preferably 80 % by mass or more, still more preferably 85 % by mass or more, and even still more preferably 90 % by mass or more and less than 100 %.

(Others)

In addition to the above-described rubber component, resin component, filler, styrene-based thermoplastic elastomer, the rubber composition for tire of the present disclosure may contain various components commonly used in the

rubber industry, if necessary. Examples thereof include a silane coupling agent, an antioxidant, wax, a softener, a processing aid, stearic acid, zinc oxide (zinc white), a vulcanization accelerator, and a vulcanizing agent, which may be appropriately selected and contained if the effects of the present disclosure are not impaired. Commercial products may be suitably used as these compounding agents.

When the rubber composition for tire of the present disclosure contains silica, it is preferable to contain a silane coupling agent to improve the effect of the silica. Examples of the silane coupling agent include bis (3-triethoxysilylpropyl) tetrasulfide, bis (3-triethoxysilylpropyl) trisulfide, bis (3-triethoxysilylpropyl) disulfide, bis (2-triethoxysilylethyl) tetrasulfide, bis (3-trimethoxysilylpropyl) tetrasulfide, bis (2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis (3-diethoxymethylsilylpropyl) tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyl tetrasulfide. The content of the silane coupling agent is preferably in a range of 2 parts by mass to 20 parts by mass and more preferably in a range of 5 parts by mass to 15 parts by mass with respect to 100 parts by mass of the silica.

Examples of the antioxidant include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the antioxidant is not particularly limited, and it is preferably in a range of 0.1 parts by mass to 5 parts by mass and more preferably 1 part by mass to 4 parts by mass with respect to 100 parts by mass of the rubber component.

Examples of the wax include paraffin wax and microcrystalline wax. The content of the wax is not particularly limited, and it is preferably in a range of 0.1 parts by mass to 5 parts by mass and more preferably 1 part by mass to 4 parts by mass with respect to 100 parts by mass of the rubber component.

The content of the zinc oxide (zinc white) is not particularly limited, and it is preferably in a range of 0.1 parts by mass to 10 parts by mass and more preferably 1 part by mass to 8 parts by mass with respect to 100 parts by mass of the rubber component.

Examples of the vulcanization accelerator include a sulfenamidebased vulcanization accelerator, a guanidine-based vulcanization accelerator, a thiazole-based vulcanization accelerator, a thiuram-based vulcanization accelerator, and a dithiocarbamate-based vulcanization accelerator. These vulcanization accelerators may be used alone or in combination of two or more. The content of the vulcanization accelerator is not particularly limited, and it is preferably in a range of 0.1 parts by mass to 5 parts by mass and more preferably in a range of 0.2 parts by mass to 4 parts by mass with respect to 100 parts by mass of the rubber component.

Examples of the vulcanizing agent include sulfur. The content of the vulcanizing agent, as a sulfur content, is preferably in a range of 0.1 parts by mass to 10 parts by mass and more preferably in a range of 1 part by mass to 4 parts by mass with respect to 100 parts by mass of the rubber component.

(Method of producing rubber composition)

A method of producing the rubber composition is not particularly limited. For example, the rubber composition for tire can be produced by blending various components appropriately selected as necessary with the above-described rubber component, resin component and filler, and performing kneading, heating, extrusion, and other processes. Further, by vulcanizing the obtained rubber composition, it is possible to obtain a vulcanized rubber.

There is no particular limitation on the conditions of the kneading, and various conditions such as the charge volume of a kneading device, the rotation speed of a rotor, the ram pressure, the kneading temperature and the kneading time, and the type of kneading device can be appropriately selected depending on the purpose. Examples of the kneading device include a Banbury mixer, an intermix, a kneader and a roll, which are normally used for kneading a rubber composition.

There is no particular limitation on the conditions of the heating, and various conditions such as heating temperature, heating time, and heating device can be appropriately selected depending on the purpose. Examples of the heating device include a heating roll machine normally used for heating a rubber composition.

There is no particular limitation on the conditions of the extrusion, and various conditions such as extrusion time, extrusion speed, extrusion device, and extrusion temperature can be appropriately selected depending on the purpose. Examples of the extrusion device include an extruder normally used for extruding a rubber composition. The extrusion temperature can be appropriately determined.

The device, method, conditions, and the like for performing the vulcanization are not particularly limited and can be appropriately selected depending on the purpose. Examples of the device for performing the vulcanization include a molding vulcanizer using a mold, which is normally used for vulcanizing a rubber composition. Regarding the vulcanization

conditions, the temperature is, for example, about 100 °C to 190 °C.

<Tread rubber>

The tread rubber of the present disclosure contains the rubber composition for tire described above. Because the tread rubber of the present disclosure contains the rubber composition for tire described above, it is possible to highly balance wet grip performance with fuel efficiency in a tire using the tread rubber.

The tread rubber of the present disclosure may be applied to a new tire or may be applied to a retreaded tire.

<Tire>

The tire of the present disclosure includes the tread rubber described above. Because the tire of the present disclosure includes the tread rubber described above, wet grip performance is highly balanced with fuel efficiency in the tire.

In accordance with the type of tire intended for use, the tire of the present disclosure may be obtained by first forming a tire using an unvulcanized rubber composition and then vulcanizing the tire, or by first forming a tire using semi-vulcanized rubber obtained by a preliminary vulcanization process or the like and then fully vulcanizing the tire. The tire of the present disclosure is preferably a pneumatic tire. The pneumatic tire may be filled with ordinary air or air with an adjusted partial pressure of oxygen, or may be filled with an inert gas such as nitrogen, argon, or helium.

## EXAMPLES

The following describes the present disclosure in more detail based on examples. The present disclosure is not limited by any means to these examples.

<Analysis method of rubber component>

The glass transition temperature (Tg) of the styrene-butadiene rubber, the amount of bound styrene, and the microstructure of the butadiene moiety were measured with the following methods. Further, the SP value (solubility parameter) of the natural rubber (isoprene skeleton rubber) and the styrene-butadiene rubber were calculated according to the Fedors method.

(1) Glass transition temperature (Tg)

A synthesized styrene-butadiene rubber was used as a sample, a DSC curve was recorded while raising the temperature from -100 °C at a rate of 20 °C/min under a flow of helium of 50 mL/min using a DSC250 manufactured by TA Instruments, and the peak top (inflection point) of the DSC differential curve was taken as the glass transition temperature.

(2) Amount of bound styrene

A synthesized styrene-butadiene rubber was used as a sample, and 100 mg of the sample was diluted to 100 mL with chloroform and dissolved to obtain a sample for measurement. The amount of bound styrene (mass%) with respect to 100 % by mass of the sample was measured based on the amount of absorption of the ultraviolet absorption wavelength (near 254nm) by the phenyl group of styrene. A spectrophotometer "UV-2450" manufactured by SHIMADZU CORPORATION was used as a measuring device.

<Analysis method of resin component>

The softening point and the weight-average molecular weight of the resin component were measured with the following method. Further, the SP value (solubility parameter) of the resin component was calculated according to the Fedors method.

(3) Softening point

The softening point of the resin component was measured according to JIS-K2207-1996 (ring and ball method).

(4) Weight-average molecular weight

The average molecular weight of the hydrogenated resin was measured by gel permeation chromatography (GPC) under the following conditions, and the polystyrene-equivalent weight-average molecular weight was calculated.

- Column temperature: 40 °C
- Injection volume :50 μL
- Carrier and flow rate: tetrahydrofuran 0.6mL/min
- Sample preparation: dissolve approximately 2.5 mg of the resin component in 10 mL of tetrahydrofuran

<Preparation of rubber composition>

According to the compositions listed in Table 1, components were blended and kneaded to prepare rubber compositions of Examples and Comparative Example.

<Preparation and evaluation of vulcanized rubber>

The obtained rubber compositions of Examples and Comparative Examples were vulcanized at 145 °C for 33 minutes to obtain vulcanized rubber test pieces. The wet grip performance and the fuel efficiency of the obtained vulcanized rubber test pieces were evaluated with the following methods.

Further, the tanδ at 0 °C (0 °C tanδ) and the tanδ at 50 °C (50 °C tanδ) of the obtained vulcanized rubber test pieces were measured using a viscoelasticity measuring device (manufactured by Rheometrics) under conditions of a temperature of 0 °C, a strain of 1 %, and a frequency of 52 Hz, and under conditions of a temperature of 50 °C, a strain of 1 %, and a frequency of 52 Hz. The measured values of 0 °C tanδ and 50 °C tanδ, and the calculated value of 0 °C tanδ/50 °C tanδ are listed in Table 1.

(5) Wet grip performance

A portable friction tester was used to measure the coefficient of friction of the test piece against a wet asphalt road surface. The evaluation results were expressed as an index with the coefficient of friction of Comparative Example being 100. A larger index indicates larger coefficient of friction, meaning better wet grip performance.

(6) Fuel efficiency

The loss tangent (tanδ) of the test piece was measured using a viscoelasticity measuring device (manufactured by Rheometrics) under conditions of a temperature of 50 °C, a strain of 1 %, and a frequency of 52 Hz. The evaluation results were expressed as an index with the reciprocal of the tanδ of Comparative Example 1 being 100. A larger index indicates smaller tanδ, meaning better fuel efficiency.

(7) Overall evaluation

A value obtained by combining the evaluation values (indexes) of the wet grip performance and the fuel efficiency was used as an index for overall evaluation.

A larger index for overall evaluation indicates better overall evaluation.

[Table 1]

Table 1

| | | | Example 1 | Example 2 | Example 3 | Comparative Example 1 | Comparative Example 2 | Comparative Example 3 | Comparative Example 4 |
|---|---|---|---|---|---|---|---|---|---|
| Composition | Natural rubber *1 | Part by mass | 20.0 | 35.0 | 35.0 | 50.0 | 65.0 | 35.0 | 55.0 |
| | Low-Tg modified SBR *2 | | 80.0 | 65.0 | 65.0 | 50.0 | 35.0 | 65.0 | 45.0 |
| | Filler *3 | | 65.0 | 65.0 | 65.0 | 65.0 | 65.0 | 65.0 | 65.0 |
| | Resin component *4 | | 30.0 | 30.0 | 40.0 | 30.0 | 30.0 | 50.0 | 50.0 |
| | Silane coupling agent *5 | | 6.5 | 6.5 | 6.5 | 6.5 | 6.5 | 6.5 | 6.5 |
| | Antioxidant *6 | | 2.0 | 2.0 | 2.0 | 2.0 | 2.0 | 2.0 | 2.0 |
| | Wax *7 | | 2.0 | 2.0 | 2.0 | 2.0 | 2.0 | 2.0 | 2.0 |
| | Zinc oxide | | 2.0 | 2.0 | 2.0 | 2.0 | 2.0 | 2.0 | 2.0 |
| | Vulcanization accelerator A *8 | | 0.8 | 0.8 | 0.8 | 0.8 | 0.8 | 0.8 | 0.8 |
| | Vulcanization accelerator B *9 | | 1.7 | 1.7 | 1.7 | 1.7 | 1.7 | 1.7 | 1.7 |
| | Sulfur | | 1.4 | 1.4 | 1.4 | 1.4 | 1.4 | 1.4 | 1.4 |
| 0 °C tanδ | | - | 0.423 | 0.432 | 0.617 | 0.430 | 0.340 | 0.736 | 0.709 |
| 50 °C tanδ | | - | 0.130 | 0.152 | 0.147 | 0.163 | 0.162 | 0.166 | 0.183 |
| 0 °C tanδ/50 °C tanδ | | - | 3.24 | 2.85 | 4.20 | 2.63 | 2.10 | 4.44 | 3.88 |

(continued)

| | | | Example 1 | Example 2 | Example 3 | Comparative Example 1 | Comparative Example 2 | Comparative Example 3 | Comparative Example 4 |
|---|---|---|---|---|---|---|---|---|---|
| Evaluation | Wet grip performance | Index | 105 | 101 | 109 | 100 | 94 | 98 | 97 |
| | Fuel efficiency | Index | 125 | 108 | 110 | 100 | 101 | 99 | 89 |
| | Overall evaluation | Index | 231 | 209 | 219 | 100 | 195 | 197 | 187 |

*1 Natural rubber: TSR #20, SP value = 8.20 $(cal/cm^3)^{1/2}$
*2 Low-Tg modified SBR: hydrocarbyloxysilane compound-modified styrene-butadiene rubber synthesized with the following method, where Tg = -65 °C, and SP value = 8.65 $(cal/cm^3)^{1/2}$
*3 Filler: silica, manufactured by TOSOH SILICA CORPORATION, product name "Nipsil AQ"
*4 Resin component: hydrogenated $C_5$-based resin, manufactured by Eastman, product name "registered trademark Impera E1780", where softening point = 130 °C, weight-average molecular weight (Mw) = 909 g/mol, and SP value = 8.35 $(cal/cm^3)^{1/2}$
*5 Silane coupling agent: manufactured by Evonik Japan Co., Ltd., product name "Si75"
*6 Antioxidant: manufactured by OUCHI SHINKO CHEMICAL INDUSTRIAL CO., LTD., product name "NOCRAC 6C"
*7 Wax: manufactured by NIPPON SEIRO CO., LTD., product name "Ozo Ace 701"
*8 Vulcanization accelerator A: manufactured by OUCHI SHINKO CHEMICAL INDUSTRIAL CO., LTD., product name "NOCCELER DM-P" *9 Vulcanization accelerator B: manufactured by SANSHIN CHEMICAL INDUSTRY CO.LTD., product name "Sanceler NS-G"

<Synthesis method of low-Tg modified SBR (*2)>

In an 800 mL pressure-resistant glass container that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50 °C. Next, 0.72 mmol of N,N-bis(trimethylsilyl)-3-[diethoxy(methyl)silyl]propylamine was added as a modifying agent to the polymerization reaction system when the polymerization conversion ratio reached nearly 100 %, and a modification reaction was carried out for 30 minutes at 50 °C. Subsequently, the reaction was stopped by adding 2 mL of an isopropanol solution containing 5 mass% of 2,6-di-t-butyl-p-cresol (BHT), and the resultant was dried with a common method to obtain a modified SBR.

As a result of measuring the microstructure of the obtained modified SBR, the amount of bound styrene was 10 mass%, the vinyl bond content of the butadiene moiety was 40 %, and the glass transition temperature (Tg) was -65 °C.

From the results listed in Table 1, it is understood that, in the rubber compositions of the examples according to the present disclosure, wet grip performance is highly balanced with fuel efficiency.

On the other hand, it can be seen that the rubber compositions of Comparative Examples 3 and 4, in which the content of the resin component is too high, have poor fuel efficiency and poor overall evaluation. Further, it can be seen that the rubber compositions of Comparative Examples 1 and 2, in which 0°C tan δ/50°C tan δ is less than 2.7, are inferior to that the examples in both wet grip performance and fuel efficiency.

INDUSTRIAL APPLICABILITY

According to the present disclosure, it is possible to provide a rubber composition for tire capable of highly balancing wet grip performance with fuel efficiency in a tire, and a tread rubber containing the rubber composition.

Further, according to the present disclosure, it is possible to provide a tire in which wet grip performance is highly balanced with fuel efficiency.

**Claims**

1. A rubber composition for tire, comprising a rubber component, a resin component, and a filler, wherein

   the rubber component comprises a diene-based rubber component A with a glass transition temperature of -50 °C or lower that contains an isoprene skeleton rubber, and a diene-based rubber component B incompatible with the diene-based rubber component A that contains a butadiene skeleton rubber,
   a total styrene content in the diene-based rubber component B is 15 % by mass or less,
   the resin component has a weight-average molecular weight, which is indicated by Mw, of 200 g/mol to 1600 g/mol, and a content of the resin component is 1 part by mass to 45 parts by mass with respect to 100 parts by mass of the rubber component,
   a content of the filler is 20 parts by mass to 120 parts by mass with respect to 100 parts by mass of the rubber component, and
   a ratio of tanδ at 0 °C, which is 0 °C tanδ, to tanδ at 50 °C, which is 50 °C tanδ, is 2.7 or more, where the ratio is indicated by 0 °C tanδ/50 °C tanδ.

2. The rubber composition for tire according to claim 1, wherein a content ratio of the diene-based rubber component A in the rubber component is 1 % by mass or more and less than 50 % by mass.

3. The rubber composition for tire according to claim 1 or 2, wherein the resin component has a softening point higher than 110 °C.

4. The rubber composition according to any one of claims 1 to 3, wherein the diene-based rubber component A comprises at least one selected from the group consisting of natural rubber and isoprene rubber.

5. The rubber composition according to any one of claims 1 to 4, wherein the diene-based rubber component B comprises at least one selected from the group consisting of styrene-butadiene rubber and butadiene rubber.

6. The rubber composition for tire according to claim 5, wherein the styrene-butadiene rubber is modified with a modifying agent having a functional group containing a nitrogen atom and an alkoxy group.

7. The rubber composition according to any one of claims 1 to 6, wherein the filler contains carbon black.

8. The rubber composition according to any one of claims 1 to 7, wherein the resin component comprises at least one selected from the group consisting of a hydrogenated C5-based resin, a hydrogenated C5-C9-based resin, a hydrogenated dicyclopentadiene-based resin which is hydrogenated DCPD-based resin, and a hydrogenated terpene-based resin.

9. A tread rubber, comprising the rubber composition for tire according to any one of claims 1 to 8.

10. A tire, comprising the tread rubber according to claim 9.

**Patentansprüche**

1. Gummizusammensetzung für Reifen, umfassend eine Gummikomponente, eine Harzkomponente und einen Füllstoff, wobei

die Gummikomponente eine Dien-basierte Gummikomponente A mit einer Glasübergangstemperatur von -50 °C oder niedriger umfasst, die ein Isopren-Gerüstgummi enthält, und eine Dien-basierte Gummikomponente B, die mit der Dien-basierten Gummikomponente A inkompatibel ist und ein Butadien-Gerüstgummi enthält,
ein Gesamtstyrolgehalt der Dien-basierten Gummikomponente B 15 % nach Masse oder weniger beträgt,
die Harzkomponente ein gewichtsmittleres Molekulargewicht, das durch Mw angegeben wird, von 200 g/mol bis 1600 g/mol aufweist und ein Gehalt der Harzkomponente 1 Massenteil bis 45 Massenteile bezogen auf 100 Massenteile der Gummikomponente beträgt,
der Füllstoffgehalt 20 bis 120 Massenteile bezogen auf 100 Massenteile der Gummikomponente beträgt, und das Verhältnis von tanδ bei 0 °C, das 0 °C tanδ ist, zu tanδ bei 50 °C, das 50 °C tanδ ist, 2,7 oder mehr beträgt, wobei das Verhältnis mit 0 °C tanδ/50 °C tanδ angegeben wird.

2. Gummizusammensetzung für Reifen nach Anspruch 1, wobei ein Mengenverhältnis der Dien-basierten Gummikomponente A in der Gummikomponente 1 % nach Masse oder mehr und weniger als 50 % nach Masse beträgt.

3. Gummizusammensetzung für Reifen nach Anspruch 1 oder 2, wobei die Harzkomponente einen Erweichungspunkt von über 110 °C aufweist.

4. Gummizusammensetzung nach einem der Ansprüche 1 bis 3, wobei die Dien-basierte Gummikomponente A mindestens eine umfasst, ausgewählt ist aus der Gruppe bestehend aus Naturkautschuk und Isoprenkautschuk.

5. Gummizusammensetzung nach einem der Ansprüche 1 bis 4, wobei die Dien-basierte Gummikomponente B mindestens eine umfasst, ausgewählt aus der Gruppe bestehend aus Styrol-Butadien-Kautschuk und Butadien-Kautschuk.

6. Gummizusammensetzung für Reifen nach Anspruch 5, wobei der Styrol-Butadien-Kautschuk durch ein Modifizierungsmittel modifiziert ist, das eine stickstoffatomhaltige Funktionsgruppe und eine Alkoxygruppe aufweist.

7. Gummizusammensetzung nach einem der Ansprüche 1 bis 6, wobei der Füllstoff Ruß enthält.

8. Gummizusammensetzung nach einem der Ansprüche 1 bis 7, wobei die Harzkomponente mindestens eines umfasst, ausgewählt aus einer Gruppe bestehend aus einem hydriertem C5-basierten Harz, einem hydriertem C5-C9-basierten Harz, einem hydriertem Dicyclopentadien-basierten Harz, das hydriertes DCPD-basiertes Harz ist, und einem hydriertem Terpen-basiertem Harz.

9. Laufflächengummi, das die Gummizusammensetzung für Reifen nach einem der Ansprüche 1 bis 8 umfasst.

10. Reifen, der das Laufflächengummi nach Anspruch 9 umfasst.

**Revendications**

1. Composition de caoutchouc pour un pneumatique, comprenant un composant de caoutchouc, un composant de résine et une charge, dans laquelle

   le composant de caoutchouc comprend un composant A de caoutchouc à base de diène avec une température de transition vitreuse de -50 °C ou moins qui contient un caoutchouc à squelette isoprène, et un composant B de caoutchouc à base de diène incompatible avec le composant A de caoutchouc à base de diène qui contient un caoutchouc à squelette butadiène,
   la teneur totale en styrène du composant B de caoutchouc à base de diène est 15 % en masse ou moins,
   le composant de résine présente une masse moléculaire moyenne en poids, qui est indiquée par Mw, de 200 g/mol jusqu'en 1 600 g/mol, et une teneur en composant de résine de 1 partie en masse pour 45 parties en masse par rapport à 100 parties en masse du composant de caoutchouc,
   la teneur en charge est 20 parties en masse à 120 parties en masse par rapport à 100 parties en masse du composant de caoutchouc, et
   un rapport de $\tan\delta$ à 0 °C, qui est 0 °C $\tan\delta$, à $\tan\delta$ à 30 °C, qui est 30 °C $\tan\delta$, est 2,7 ou plus, le rapport étant indiqué par 0 °C $\tan\delta$/30 °C $\tan\delta$.

2. Composition de caoutchouc pour un pneumatique selon la revendication 1, dans laquelle le rapport de teneur du composant A de caoutchouc à base de diène dans le composant de caoutchouc est 1 % en masse ou plus et moins de 50 % en masse.

3. Composition de caoutchouc pour un pneumatique selon la revendication 1 ou 2, dans laquelle le composant de résine présente un point de ramollissement supérieur à 110 °C.

4. Composition de caoutchouc selon l'une quelconque des revendications 1 à 3, dans laquelle le composant A de caoutchouc à base de diène comprend au moins un élément choisi dans le groupe constitué par le caoutchouc naturel et le caoutchouc isoprène.

5. Composition de caoutchouc selon l'une quelconque des revendications 1 à 4, dans laquelle le composant B de caoutchouc à base de diène comprend au moins un élément choisi dans le groupe constitué par le caoutchouc styrène-butadiène et le caoutchouc butadiène.

6. Composition de caoutchouc pour un pneumatique selon la revendication 5, dans laquelle le caoutchouc styrène-butadiène est modifié par un agent modificateur présentant un groupe fonctionnel contenant un atome d'azote et un groupe alcoxy.

7. Composition de caoutchouc selon l'une quelconque des revendications 1 à 6, dans laquelle la charge contient du noir de carbone.

8. Composition de caoutchouc selon l'une quelconque des revendications 1 à 7, dans laquelle le composant de résine comprend au moins un élément choisi dans le groupe constitué par une résine en C5 hydrogénée, une résine en C5-C9 hydrogénée, une résine de dicyclopentadiène hydrogénée qui est une résine hydrogénée à base de DCPD, et une résine de terpène hydrogénée.

9. Caoutchouc de la bande de roulement comprenant la composition de caoutchouc pour un pneumatique selon l'une quelconque des revendications 1 à 8.

10. Pneumatique comprenant le caoutchouc de la bande de roulement selon la revendication 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015079703 A
- WO 2003046020 A
- JP 2007217562 A


### Non-patent literature cited in the description


- **R.R. HAMPTON**. *Analytical Chemistry*, 1949, vol. 21, 923